# FASCICULE DE BREVET EUROPEEN

(11) **EP 3 189 430 B1**
(45) Date de publication et mention de la délivrance du brevet: **30.06.2021**
(21) Numéro de dépôt: 15770562.5
(22) Date de dépôt: 31.08.2015
(51) Int. Cl.: H04L 29/06, H04L 29/08, G06F 9/455, H04W 76/12

(54) **DISPOSITIFS, PROGRAMME D'ORDINATEUR, SUPPORT D'ENREGISTREMENT LISIBLE PAR UN ORDINATEUR ET PROCÉDÉ DE CONTRÔLE D'UN COEUR DE RÉSEAU IP**
GERÄTE, COMPUTERPROGRAMM, COMPUTERLESBARES SPEICHERMEDIUM UND VERFAHREN ZUR IP KERNNETZWERKSTEUERUNG
DEVICES, COMPUTER PROGRAM, COMPUTER-READABLE STORAGE MEDIUM AND CONTROL METHOD FOR AN IP CORE NETWORK

(30) Priorité: 03.09.2014 FR 1458246
(43) Date de publication de la demande: 12.07.2017
(73) Titulaire: ORANGE, 75015 Paris (FR)
(72) Inventeur: SAMA, Malla Reddy, 86159 Augsburg (DE); SUCIU, Lucian, F-CESSON SEVIGNE 35510 (FR); AFLATOONIAN, Amin, F-35000 Rennes (FR); GUILLOUARD, Karine, F-35135 Chantepie (FR)
(74) Mandataire: Cabinet Beau de Loménie
(86) Numéro de dépôt international: PCT/FR2015/052301
(87) Numéro de publication internationale: WO 2016/034798

(56) Documents cités:
- US-A1- 2012 281 708
- US-A1- 2013 142 201
- US-A1- 2013 283 364
- US-A1- 2014 241 247

## Description

### Arrière-plan de l'invention

L'invention se rapporte au domaine général des télécommunications. Elle concerne plus particulièrement une architecture de cœur de réseau IP (Internet Protocol). L'invention s'applique ainsi de façon privilégiée mais non limitative aux réseaux de communication conformes à la norme LTE (Long Term Evolution) définie par le consortium de standardisation 3GPP (Third Generation Partnership Project), et plus spécifiquement à l'architecture d'un cœur de réseau LTE/EPC (Evolved Packet Core).

Une augmentation exponentielle du trafic des télécommunications mobiles est attendue dans les prochaines années, dynamisée par l'apparition de nouvelles applications, de nouveaux terminaux et de débits de communication de plus en plus élevés, ainsi que de nouveaux acteurs dans le domaine des télécommunications mobiles, tels que les opérateurs de réseaux mobiles virtuels aussi connus sous l'appellation de MVNO (Mobile Virtual Network Operator). De façon connue en soi, ces opérateurs MVNO disposent généralement de leurs propres cœurs de réseau, ce qui leur permet de développer et de proposer leurs propres applications aux utilisateurs, mais s'appuient sur les réseaux d'accès des opérateurs traditionnels.

Dans ce contexte, l'architecture LTE/EPC a été définie par le consortium 3GPP pour fournir une connectivité IP transparente entre un terminal d'un utilisateur, autrement désigné par équipement utilisateur (ou UE pour « User Equipment »), et des réseaux de paquets de données (ou PDNs pour « Packet Data Networks ») aptes à offrir à ce terminal divers services de communication, tels que des services de voix sur IP ou VoIP (Voice over IP), de téléchargements de données, de vidéos à la demande, etc.

Cette architecture repose sur :
- un réseau d'accès (ou E-UTRAN pour « Evolved-Universal Terrestrial Radio Access Network ») auquel est connecté le terminal de l'utilisateur via une station de base désignée par « eNodeB » (eNB) ; et
- un cœur de réseau IP (ou EPC) gérant les échanges de données, en liaisons montante et descendante, entre ce terminal et les réseaux de paquets de données reliés au cœur de réseau.

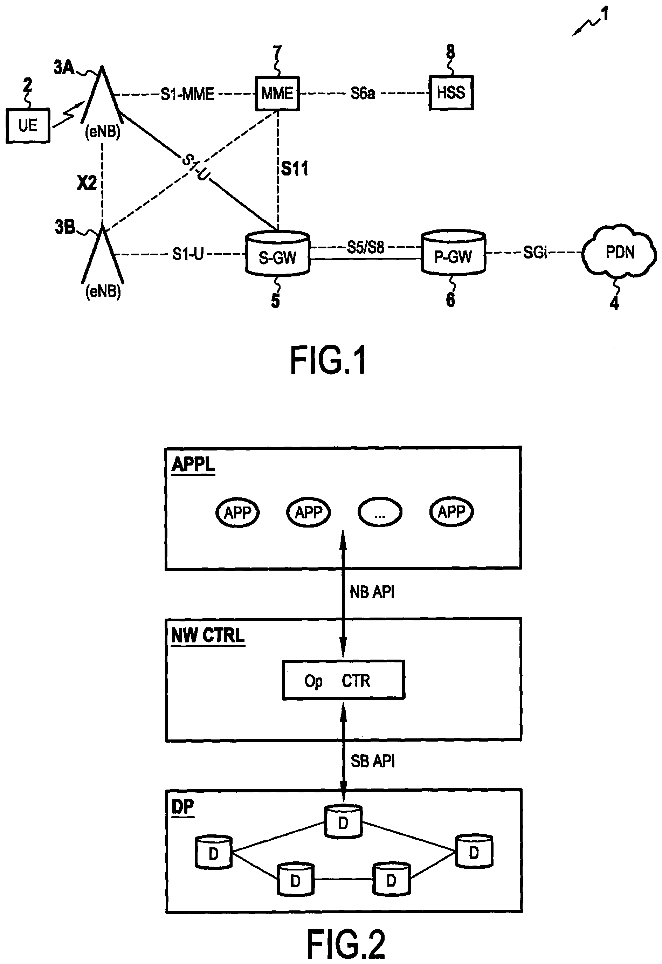

La **figure 1** représente schématiquement les différents équipements de réseau sur lesquels s'appuie l'architecture LTE/EPC dans sa définition actuelle par le consortium 3GPP, et telle que décrite notamment dans le document 3GPP TS 23.401 intitulé « Technical Specification Group Services and System aspects ; General Packet Radio Service (GPRS) enhancements for Evolved Universal Terrestrial Radio Access Network (E-UTRAN) Access », Release 12, mars 2013. A titre indicatif, les échanges prévus entre ces équipements pour le transfert des données (i.e. dans le plan de données ou plan utilisateur) sont modélisés par des traits pleins, tandis que les échanges de signalisation prévus entre ces équipements pour supporter ces transferts de données (i.e. dans le plan de contrôle ou de signalisation) sont modélisés par des traits discontinus.

Plus précisément sur la figure 1, le cœur de réseau EPC 1 permet à un terminal utilisateur UE 2, rattaché à (i.e. servi par) une station de base eNB 3A d'un réseau d'accès tel qu'un réseau de télécommunications mobile, d'accéder à des services offerts par un réseau de paquets de données externe PDN 4.

A cet effet, le cœur de réseau EPC 1 comprend quatre types d'équipements, à savoir :
- une passerelle de transfert de données 5, autrement appelée passerelle SGW (pour « Serving GateWay »), située entre le réseau d'accès et le cœur de réseau 1 ;
- une passerelle d'interconnexion 6, autrement appelée passerelle PGW (pour « PDN GateWay »), permettant de connecter le cœur de réseau 1 au réseau externe 4 de paquets de données ;
- un équipement 7 de gestion de mobilité des terminaux, autrement désigné par équipement MME (pour « Mobility Management Entity »), en charge d'assurer la connectivité IP des terminaux lorsque ceux-ci sont en situation de mobilité ; et
- une base de données utilisateurs 8, autrement appelée serveur d'abonnés du réseau HSS (pour « Home Subscriber Server »).

Les stations de base 3A et 3B sont connectées directement à l'équipement MME 7 et à la passerelle de transfert de données SGW 5 par l'intermédiaire d'interfaces S1-MME et S1-U respectivement.

L'équipement MME 7 gère la mobilité et la connectivité réseau (IP) du terminal 2. Elle est responsable de son authentification (en vue de l'autoriser à accéder au cœur de réseau 1), et gère l'établissement de sessions de communication pour ce terminal ainsi que la mobilité intra-3GPP.

Les passerelles SGW 5 et PGW 6 sont responsables du transfert des données au sein du cœur de réseau 1, de la gestion de la mobilité et du contrôle de la qualité de service dans le plan de données.

L'équipement MME 7 est connecté à la passerelle de transfert de données SGW 5 par l'intermédiaire d'une interface logique S11. La passerelle de transfert de données SGW 5 est connectée à la passerelle d'interconnexion PGW 6 par l'intermédiaire d'une interface S5.

La gestion de la mobilité des terminaux au sein du réseau s'appuie selon la définition actuelle de l'architecture LTE/EPC sur le protocole GTP (GPRS Tunneling Protocol). Ce protocole comporte plusieurs composantes, dont :
- le protocole GTP-U, utilisé pour le transfert (échange) de données utilisateur entre deux tunnels de communication séparés, afin de gérer les situations de mobilité du terminal utilisateur sur les interfaces S1 et S5 ; et
- le protocole GTP-C utilisé pour établir, mettre à jour et maintenir les tunnels de communication GTP. Les échanges de signalisation sur les interfaces S11 et S5 s'appuient ainsi sur le protocole GTP-C.

Des tunnels de communication GTP distincts sont établis pour les différents types de trafic échangés dans le réseau (i.e. pour chaque qualité de service), et plus spécifiquement, pour chaque session de communication PDP (Packet Data Protocol) gérée par le cœur de réseau. Le protocole de communication GTP contribue donc non seulement à la gestion de la mobilité des terminaux mais également à la gestion de la qualité de service dans le réseau.

L'architecture LTE/EPC telle qu'elle est actuellement définie par le consortium 3GPP n'est pas réellement optimisée et rend difficile l'intégration de nouveaux services par les opérateurs des coeurs de réseau IP, qu'il s'agisse d'opérateurs traditionnels ou de type MVNO.

En effet, outre la quantité de signalisation importante induite par l'utilisation du protocole GTP pour gérer la mobilité des terminaux et la qualité de service dans le réseau, les passerelles PGW d'interconnexion avec les réseaux de paquets externes, les passerelles SGW de transfert de données et l'équipement MME de gestion de mobilité sont prévus sur des équipements matériels (i.e. « hardware ») spécialisés qui sont conçus spécifiquement pour répondre à la demande des opérateurs. Ces équipements sont donc particulièrement coûteux et difficiles à gérer. Ils sont figés et doivent être provisionnés et configurés de manière statique.

Ce choix d'implémentation offre peu de flexibilité en matière de réutilisation et/ou de réorganisation des ressources, notamment en cas d'incidents affectant le réseau (telle une congestion du réseau par exemple). Le réseau est dimensionné en tenant compte de la charge du réseau aux heures de pointe (ou de pic) et pour augmenter la capacité du réseau, il est nécessaire de déployer de nouveaux équipements matériels sur des sites spécifiques du réseau. La maintenance et le fonctionnement d'un tel réseau, configuré ainsi de manière statique, sont donc particulièrement coûteux, consommateurs en temps, et laborieux à mettre en œuvre.

Il apparait bien dès lors les limites de l'architecture LTE/EPC actuelle par rapport à l'intégration de nouveaux services par les opérateurs de télécommunications mobiles.

Le document de J. Kempf et al. intitulé « Moving the Mobile Evolved Packet Core to the Cloud », 5th International Workshop on Selected Topics in Mobile and Wireless Computing, 2012, propose une évolution de l'architecture de cœur de réseau LTE/EPC définie par le consortium 3GPP dans laquelle les plans de données et de contrôle sont séparés, et qui utilise le principe de réseau défini par logiciel communément désigné par SDN pour « Software Defined Networking ».

De façon connue, une architecture de réseau SDN permet de découpler les plans de contrôle et de données en centralisant l'intelligence du réseau (c'est-à-dire les fonctions de contrôle du réseau) au niveau d'un dispositif de contrôle logiciel. Le comportement des équipements du réseau est alors défini par des règles reçues du dispositif de contrôle, telles que des règles de traitement ou de transfert des données (i.e. du trafic). Le concept SDN s'appuie sur le protocole de communication OpenFlow™ défini par l'ONF (Open Networking Foundation), qui permet une programmation simplifiée, via une interface standard, des équipements du réseau.

Plus spécifiquement, le document de J. Kempf et al. propose de déplacer les fonctions actuelles de l'équipement MME ainsi que le plan de contrôle des passerelles de transfert de données SGW et de la passerelle d'interconnexion PGW, dans des applications s'exécutant au-dessus d'un dispositif de contrôle implémenté par une machine virtuelle localisée dans un centre de données externe. Un tel centre de données externe est aussi connu sous l'appellation de nuage informatique ou de « cloud » en anglais. Les applications interagissent avec le dispositif de contrôle logiciel par le biais d'interfaces de programmation ou API (Application Programming Interfaces). Les équipements du plan de données des passerelles de transfert et de la passerelle d'interconnexion sont remplacés par des commutateurs OpenFlow™. Le dispositif de contrôle est responsable de l'établissement du plan de données.

Cette proposition s'appuie toutefois sur les mêmes interfaces entre les entités de contrôle du réseau que celles définies par le consortium 3GPP et mentionnées précédemment (typiquement sur les interfaces S1, S11 et S5 utilisant le protocole GTP). Ces interfaces reposent sur des procédures qui peuvent s'avérer complexes (ex. procédure de restauration), notamment en cas de dysfonctionnement détecté au niveau d'un équipement du plan de données tel que par exemple une surcharge ou une défaillance d'une passerelle de transfert SGW, et qui ne sont pas toujours transparentes pour les utilisateurs, entraînant de ce fait une dégradation de l'expérience des utilisateurs.

De façon similaire, l'architecture proposée par J. Kempf et al. ne permet pas de gérer facilement une défaillance ou une surcharge d'une fonction du plan de contrôle du cœur de réseau, telle que par exemple de la fonction MME.

Par conséquent, la solution proposée par J. Kempf et al., même si elle offre la possibilité de simplifier la maintenance et la configuration des équipements du cœur de réseau, ne permet pas de fournir une qualité d'expérience aux utilisateurs adaptée à leurs besoins et qui répond à la demande croissante des opérateurs d'intégrer aisément de nouveaux services.

La demande de brevet US 2014/0241247, dont l'un des inventeurs est l'auteur susmentionné, présente une architecture similaire à celle de l'article évoqué précédemment, dans laquelle des fonctions virtuelles communiquent directement avec un contrôleur OpenFlow, sans recourir à un serveur de connexion intermédiaire, ni à l'utilisation de bases de données permettant l'identification de fonctions virtuelles allouées aux terminaux, ainsi que leur état, auprès d'un tel serveur de connexion.

### Objet et résumé de l'invention

L'invention offre une solution notamment à ce problème en proposant un dispositif de contrôle d'un cœur de réseau IP, apte à commander une station de base d'un réseau d'accès, un commutateur du cœur de réseau IP et une passerelle d'interconnexion du cœur de réseau IP à un réseau externe de paquets de données, ce dispositif de contrôle comprenant :
- un module de communication, configuré pour communiquer avec un serveur de connexion à un système informatique en nuage et, par l'intermédiaire de ce serveur, avec une pluralité de fonctions virtuelles d'un plan de contrôle du cœur de réseau IP instanciées dans le système informatique en nuage ;
- un module de gestion :
   ∘ d'une première base de données identifiant, pour au moins un terminal d'un utilisateur géré par le cœur de réseau IP et servi par la station de base, au moins une des fonctions virtuelles allouée à ce terminal ; et
   ∘ d'une seconde base de données associant à au moins une des fonctions virtuelles, un identifiant de cette fonction auprès du serveur de connexion et un état de cette fonction ;
   ce module de gestion étant configuré pour mettre à jour la première et/ou la seconde base de données à partir d'informations reçues par le module de communication en provenance du serveur de connexion et/ou des fonctions virtuelles ; et
- un module de commande configuré pour utiliser des données des bases de données pour établir et/ou maintenir, pour un terminal géré par le cœur de réseau IP, un plan usager entre la station de base, le commutateur et la passerelle d'interconnexion.

Corrélativement, l'invention vise également un procédé de contrôle d'un cœur de réseau IP comprenant :
- une étape de réception d'informations en provenance d'un serveur de connexion à un système informatique en nuage, et/ou d'au moins une fonction virtuelle d'un plan de contrôle du cœur de réseau IP instanciée dans le système informatique en nuage par l'intermédiaire du serveur de connexion ;
- une étape de gestion :
   ∘ d'une première base de données identifiant, pour au moins un terminal d'un utilisateur géré par le cœur de réseau IP au moins une des fonctions virtuelles allouée à ce terminal ; et/ou
   ∘ d'une seconde base de données associant à au moins une des fonctions virtuelles, un identifiant de cette fonction auprès du serveur de connexion et un état de cette fonction ;
   cette étape de gestion comprenant une mise à jour de la première et/ou de la seconde base de données à partir desdites informations reçues ; et
- une étape d'établissement et/ou de maintien, pour un terminal géré par le cœur de réseau IP, d'un plan usager entre une station de base d'un réseau d'accès servant le terminal, un commutateur du cœur de réseau IP et une passerelle d'interconnexion du cœur de réseau IP à un réseau externe de paquets de données, en utilisant des données de la première et/ou de la deuxième base de données.

L'invention s'appuie ainsi sur les principes SDN du réseau défini par logiciel pour découpler les plans usager (ou de données) et de contrôle (ou de signalisation) dans le cœur de réseau IP. Il en résulte une nouvelle architecture de cœur de réseau IP programmable, permettant une (re)configuration dynamique du plan usager et du plan de contrôle.

Plus précisément, l'invention propose d'établir et de commander, par l'intermédiaire d'un dispositif de contrôle par exemple logiciel, un plan usager relativement simple s'appuyant sur des passerelles d'interconnexion du cœur de réseau IP à des réseaux externes de paquets de données, des commutateurs déployés dans le cœur de réseau IP (et opérant au niveau de la couche 2 du modèle OSI (Open Systems Interconnection)), et des stations de base de réseaux d'accès connectés à ces commutateurs. Les stations de base des réseaux d'accès, les commutateurs et les passerelles d'interconnexion sont connectées directement au dispositif de contrôle, ce qui facilite le contrôle exercé par ce dernier.

Dans un mode particulier de réalisation, le procédé de contrôle comprend une étape de commande de la station de base et/ou du commutateur et/ou de la passerelle d'interconnexion, cette étape de commande comprenant la transmission à la station de base et/ou au commutateur et/ou à la passerelle d'interconnexion d'au moins une règle de traitement de flux de données relatifs au terminal, ladite au moins une règle de traitement étant définie à partir de données de la première et/ou de la seconde base de données et étant destinée à être appliquée lors d'un transfert de données dans le plan usager.

Autrement dit, le contrôle exercé par le dispositif de contrôle sur les équipements de réseau du plan usager se traduit notamment par la transmission de règles de traitement et de routage des flux de données relatifs aux terminaux gérés par le cœur de réseau IP (autrement dit destinés à ou en provenance de ces terminaux), ces règles de traitement étant destinées à être appliquées par les équipements de réseau commandés par le dispositif de contrôle (i.e. commutateurs, stations de base et passerelles d'interconnexion). Elles sont définies par le dispositif de contrôle à partir des informations stockées dans les première et seconde bases de données, et de ses interactions avec les fonctions du plan de contrôle du cœur de réseau IP.

Les fonctions du plan de contrôle du cœur de réseau IP comprennent par exemple :
- au moins une fonction de gestion de la mobilité de terminaux dans le cœur de réseau IP ; et/ou
- au moins une fonction de contrôle de la passerelle d'interconnexion et/ou du commutateur. On note qu'il peut s'agir d'une fonction unique qui gère à la fois une passerelle d'interconnexion et les commutateurs connectés à cette passerelle, ou une fonction distincte pour la passerelle d'interconnexion et pour les commutateurs.

De façon avantageuse, ces fonctions du plan de contrôle sont des fonctions virtuelles instanciées dans un système informatique en nuage, par exemple sur des machines virtuelles distinctes, ce qui permet d'adapter aisément en temps réel leur nombre, leurs configurations et/ou encore leurs capacités, en fonction des besoins de l'opérateur du cœur de réseau IP et des terminaux gérés par ce dernier. On peut en particulier, grâce à l'invention, instancier plusieurs fonctions de contrôle d'un même type, par exemple plusieurs fonctions de gestion de la mobilité des terminaux, la gestion et le provisionnement de ces fonctions étant facilités par les bases de données maintenues par le dispositif de contrôle.

Ces fonctions de contrôle communiquent avec le dispositif de contrôle par l'intermédiaire d'un serveur de connexion au système informatique en nuage qui tient informé le dispositif de contrôle de l'état de ces fonctions, notamment en termes de disponibilité et/ou de charge. Ce serveur de connexion permet de provisionner facilement de nouvelles fonctions dans le système informatique en nuage en cas de besoin. Ces informations de disponibilité et d'état fournies par le serveur de connexion sont stockées par le dispositif de contrôle dans la seconde base de données en association avec un identifiant de chaque fonction du plan de contrôle instanciée dans le système informatique en nuage. Ces informations viennent compléter les informations stockées dans la première base de données qui permettent au dispositif de contrôle d'identifier aisément les fonctions du plan de contrôle allouées à un terminal de sorte à pouvoir établir et maintenir (incluant une adaptation du plan usager si besoin) de manière simple et efficace un plan usager pour le transfert de flux de données pour ce terminal.

Le serveur de connexion qui réalise l'intermédiaire entre le dispositif de contrôle et les fonctions virtuelles du plan de contrôle instanciées dans le système informatique en nuage est par exemple un serveur dont le dispositif de contrôle et les fonctions virtuelles sont des clients, et avec lesquels il communique en utilisant le protocole de communication XMPP (eXtensible Messaging and Presence Protocol).

Un tel serveur permet en outre de sécuriser l'accès au cœur de réseau IP en n'ouvrant cet accès qu'à des applications ou des fonctions virtuelles autorisées et authentifiées.

Ainsi, l'invention vise également un serveur de connexion à un système informatique en nuage, ce serveur comprenant :
- un module de gestion d'une base de données associant à au moins un client du serveur de connexion un identifiant de ce client auprès du serveur de connexion et un état du client, ledit au moins un client comprenant au moins une fonction virtuelle d'un plan de contrôle d'un cœur de réseau IP instanciée dans le système informatique en nuage et un dispositif de contrôle du cœur de réseau IP selon l'invention ; et
- un module de communication apte à communiquer avec ladite au moins une fonction virtuelle et le dispositif de contrôle, et configuré pour transmettre au dispositif de contrôle des informations extraites de la base de données relatives à ladite au moins une fonction virtuelle.

Les capacités d'un tel serveur (et notamment la base de données clients qu'il maintient), ainsi que ses interactions avec le dispositif de contrôle et les fonctions virtuelles du plan de contrôle du cœur de réseau IP permettent au dispositif de contrôle de surveiller l'état de ces fonctions en temps réel et d'adapter en temps réel, en fonction de cet état, la topologie du plan de contrôle du cœur de réseau IP.

Ainsi, par exemple, si une fonction de gestion de la mobilité des terminaux (ou fonction MME) est surchargée, le dispositif de contrôle en est informé par l'intermédiaire du serveur de connexion et peut agir de manière appropriée. Il peut notamment sélectionner une nouvelle fonction virtuelle de contrôle instanciée dans le système informatique en nuage, ou demander l'instanciation d'une nouvelle fonction virtuelle dans le système informatique en nuage, ou encore équilibrer le trafic entre les fonctions virtuelles de gestion de la mobilité déjà instanciées. L'action du serveur de connexion dans une telle situation peut être :
- réactive, en informant le dispositif de contrôle de l'état de surcharge courant de la fonction de gestion de la mobilité pour que celui-ci envisage une action appropriée ; ou
- proactive, en fournissant au dispositif de contrôle une liste de fonctions de gestion de la mobilité disponibles.

Il en résulte une flexibilité de la gestion du cœur de réseau et une amélioration de la fiabilité de la connectivité IP offerte aux terminaux par celui-ci. L'expérience des utilisateurs est ainsi privilégiée.

L'invention s'applique ainsi de façon privilégiée à une architecture de cœur de réseau LTE/EPC. Dans un tel contexte, et contrairement à l'état de la technique décrit dans le document de J. Kempf et al, l'architecture proposée par l'invention offre d'autres interfaces entre les équipements de réseau sur lesquels s'appuie le plan usager et les fonctions du plan de contrôle du cœur de réseau IP que les interfaces définies actuellement dans le standard LTE. Plus spécifiquement, l'invention propose de remplacer les protocoles de communication prévus sur les interfaces de communication S1-MME (entre les stations de base eNodeB et l'entité de gestion de la mobilité MME du cœur de réseau), S5 (entre les passerelles de transfert de données SGW et les passerelles d'interconnexion du cœur de réseau IP aux réseaux externes de paquets de données PGW) et S11 (entre l'entité de gestion de la mobilité et les passerelles de transfert de données SGW). La nouvelle architecture de cœur de réseau définie par l'invention permet ainsi de simplifier certaines procédures définies par le standard. Ainsi notamment, elles permettent une mise à jour directe par le dispositif de contrôle des stations de base en cas de défaillance d'un commutateur.

L'invention offre par ce biais aux terminaux des procédures plus souples et plus transparentes en termes de connectivité IP, qui ne nécessitent pas de signalisation excessive.

En outre, comme mentionné précédemment, le fait que les fonctions du plan de contrôle soient instanciées dans un système informatique en nuage, et la gestion de ces fonctions par le dispositif de contrôle permise par le maintien à jour des première et seconde bases de données du dispositif de contrôle et de la base de données clients du serveur de connexion, permettent de provisionner ces fonctions virtuelles suivant les besoins des opérateurs de télécommunications.

Ceci peut permettre notamment de faciliter l'intégration de nouveaux opérateurs de télécommunications, et notamment d'opérateurs virtuels, en simplifiant le contrôle de l'accès offert à ces derniers et leur utilisation des équipements (éventuellement virtuels) de l'opérateur traditionnel auquel ils sont rattachés. L'invention permet de ne pas se limiter à un partage classique du réseau d'accès tel qu'il est généralement mis en œuvre aujourd'hui entre les opérateurs traditionnels et les opérateurs virtuels, mais d'envisager d'autres façons d'intégrer des opérateurs virtuels. On peut ainsi par exemple allouer une fonction virtuelle distincte du plan de contrôle à chaque opérateur virtuel utilisant l'infrastructure de l'opérateur traditionnel considéré. La gestion et l'activité des fonctions virtuelles allouées respectivement à plusieurs opérateurs virtuels sont simplifiées grâce à la base de données clients maintenue par le serveur de connexion.

Dans un mode particulier de réalisation, le dispositif de contrôle selon l'invention comprend en outre un module d'allocation configuré pour allouer au terminal géré par le cœur de réseau IP au moins une dite fonction virtuelle instanciée dans le système informatique en nuage en fonction d'une information représentative d'un état de disponibilité et/ou de charge courant de cette fonction virtuelle, transmise par le serveur de connexion.

Corrélativement, le module de communication est configuré pour transmettre au dispositif de contrôle une information représentative d'un état de disponibilité et/ou de charge courant d'au moins une dite fonction virtuelle identifiée dans la base de données.

Corrélativement encore, le procédé de contrôle comprend en outre une étape d'allocation d'une des fonctions virtuelles du plan de contrôle au terminal en fonction d'une information représentative d'un état de disponibilité et/ou de charge courant de cette fonction transmis par le serveur de connexion.

Cette information de disponibilité ou d'état de charge courant peut être aisément obtenue par le serveur de connexion, notamment lorsque celui-ci est un serveur XMPP.

Le module d'allocation du dispositif de contrôle (respectivement l'étape d'allocation du procédé de contrôle) permet de gérer efficacement et rapidement les situations de surcharge ou de défaillance des fonctions du plan de contrôle pouvant affecter le cœur de réseau IP.

En outre, il joue également un rôle important lors de l'établissement du plan usager supportant une session de communication d'un terminal, pour allouer à ce terminal des fonctions du plan de contrôle aptes à gérer les communications de ce terminal.

Dans un autre mode de réalisation, la première base de données utilisateurs du dispositif de contrôle comprend en outre, pour le terminal, au moins un paramètre de communication destiné à être utilisé pour un transfert de données dans le plan usager établi par le module de commande.

Par exemple, ledit au moins un paramètre de communication comprend une adresse de la passerelle d'interconnexion, une adresse du commutateur et des identifiants de points d'extrémité d'un tunnel de communication établi dans le plan usager.

Ces paramètres de communication permettent l'établissement d'un tunnel de communication dans le plan usager entre la station de base et la passerelle d'interconnexion : ce tunnel de communication est par exemple un tunnel GTP. Ces paramètres de communication sont centralisés au niveau du dispositif de contrôle ce qui lui permet de définir facilement des règles de traitement des flux de données destinés ou émis par le terminal, avec lesquelles il commande les équipements de réseau définissant le plan usager établi pour ce terminal.

Il convient de noter qu'avantageusement, l'invention permet l'établissement d'un tunnel de communication unique entre la station de base et la passerelle d'interconnexion avec le réseau externe. Au contraire, dans l'état de la technique présenté par J. Kempf et al. comme dans le standard 3GPP, un premier tunnel de communication est établi entre la station de base et la passerelle de transfert de données SGW à laquelle la station de base est connectée, et un second tunnel de communication est établi entre la passerelle de transfert de données et la passerelle d'interconnexion avec le réseau externe. L'établissement de ces tunnels (conformes au protocole GTP dans le standard 3GPP) requiert à chaque fois l'échange de diverses informations et notamment d'identifiants de tunnels, ce qui induit une forte signalisation et peut s'avérer complexe notamment lorsque des procédures de restauration de ces tunnels sont mises en oeuvre. L'invention permet donc de limiter la signalisation induite dans le cœur de réseau IP.

Selon un autre aspect, l'invention vise aussi :
- un dispositif de contrôle selon l'invention ;
- un serveur de connexion à un système informatique en nuage selon l'invention ; et
- au moins une fonction virtuelle d'un plan de contrôle du cœur de réseau IP instanciée dans le système informatique en nuage ;
le dispositif de contrôle et ladite au moins une fonction virtuelle étant des clients du serveur de connexion.

Le cœur de réseau IP bénéficie des mêmes avantages que ceux cités précédemment pour le dispositif de contrôle et le serveur de connexion.

Dans un mode particulier de réalisation, les différentes étapes du procédé de contrôle sont déterminées par des instructions de programmes d'ordinateurs.

En conséquence, l'invention vise aussi un programme d'ordinateur sur un support d'informations, ce programme étant susceptible d'être mis en œuvre dans un dispositif de contrôle ou plus généralement dans un ordinateur, ce programme comportant des instructions adaptées à la mise en œuvre des étapes d'un procédé de contrôle tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de contrôle, le dispositif de contrôle, le serveur de connexion et le cœur de réseau IP selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1, déjà décrite, représente l'architecture d'un cœur de réseau LTE/EPC telle que proposée par le consortium 3GPP ;
- les figures 2 et 3 illustrent les principes d'un réseau SDN défini par logiciel ;
- la figure 4 représente, dans son environnement, un cœur de réseau comprenant un dispositif de contrôle et un serveur de connexion conformes à l'invention dans un mode particulier de réalisation ;
- les figures 5A et 5B représentent schématiquement l'architecture matérielle d'un dispositif informatique implémentant le dispositif de contrôle et celle d'un dispositif informatique implémentant le serveur de connexion illustrés à la figure 4 ; et
- les figures 6 et 7 représentent respectivement les principales étapes mise en œuvre par le cœur de réseau IP illustré à la figure 4 pour établir dans deux contextes différents un plan usager permettant le transfert de données d'un terminal, ces étapes reprenant les principales étapes d'un procédé de contrôle selon l'invention.

### Description détaillée de l'invention

Comme mentionné précédemment, l'invention propose d'implémenter une architecture SDN de réseau défini par logiciel au sein d'un cœur de réseau IP, tel que par exemple un cœur de réseau LTE/EPC, de sorte à améliorer la flexibilité et la fiabilité en termes de connectivité IP de ce cœur de réseau. Cette nouvelle architecture permet de répondre plus efficacement aux besoins des utilisateurs et des opérateurs, d'intégrer plus facilement de nouveaux services et d'ouvrir de façon sécurisée le réseau à des tiers tels que des opérateurs mobiles virtuels.

Plus précisément, l'invention définit un nouveau plan de contrôle (signalisation) et un nouveau plan usager (de données) dans le cœur de réseau IP selon lesquels :
- une pluralité de passerelles d'interconnexion du cœur de réseau IP avec des réseaux de paquets de données externes et une pluralité de commutateurs (opérant au niveau de la couche 2 du modèle OSI (Open Systems Interconnection)) connectés à ces passerelles ainsi qu'à des stations de base d'un (ou de plusieurs) réseau d'accès, sont commandées par un dispositif de contrôle centralisé ; et
- une pluralité de fonctions du plan de contrôle sont instanciées sur des machines virtuelles d'un système informatique en nuage et communiquent avec le dispositif de contrôle par l'intermédiaire d'un serveur de connexion au système informatique en nuage.

Dans le mode de réalisation décrit ici, le dispositif de contrôle est un dispositif de contrôle logiciel, programmable, qui commande les passerelles d'interconnexion, les commutateurs et les stations de base du réseau d'accès à l'aide de règles de traitement, via le protocole OpenFlow™. Le protocole OpenFlow™ est décrit notamment dans le document « Openflow switch spécification, version 1.3.1 », Septembre 2012.

Les fonctions du plan de contrôle, telles que les fonctions MME de gestion de la mobilité des terminaux, les fonctions de contrôle des passerelles d'interconnexion et des commutateurs, sont quant à elles déplacées sur des machines virtuelles dans un système informatique en nuage, dont l'accès est encadré par un serveur de connexion XMPP. Ainsi, dans le mode de réalisation décrit ici, le dispositif de contrôle communique avec les fonctions du plan de contrôle selon le protocole XMPP connu en soi.

Grâce à cette architecture et au découplage des plans usager et de contrôle, il est très facile de provisionner des équipements dans le plan usager et de connecter les fonctions de contrôle correspondantes dans le système informatique en nuage. On obtient ainsi plus de flexibilité que dans l'architecture LTE/EPC proposée actuellement dans le standard 3GPP.

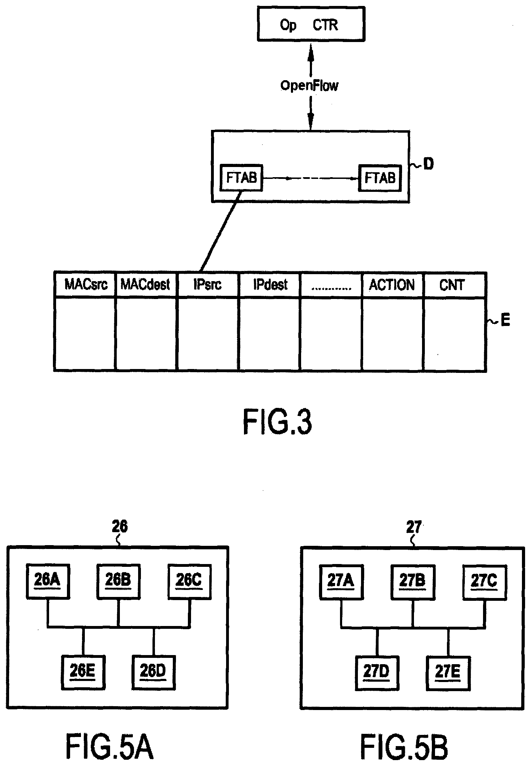

Pour faciliter la compréhension de l'invention, nous allons dans un premier temps rappeler brièvement, en référence aux figures 2 et 3, les principes généraux d'une architecture SDN. Une telle architecture est décrite en détail dans le document édité par l'ONF intitulé « Software-Defined Networking: The New Norm for Networks », 13 avril 2012. Dans l'exemple retenu pour illustrer ces principes, l'architecture SDN repose sur l'utilisation du protocole OpenFlow™.

Comme mentionné précédemment, le concept SDN permet de spécifier le comportement d'équipements réseau à l'aide de programmes de contrôle haut niveau, ce qui permet d'automatiser aisément certaines tâches comme la configuration des équipements du réseau ou la gestion des politiques (ou services) appliquées au niveau du réseau.

A cet effet, l'architecture SDN centralise l'intelligence du réseau (i.e. les fonctions de contrôle du réseau et de ses équipements) dans un dispositif de contrôle (ou contrôleur) logiciel. Le comportement des équipements du réseau en présence de données relatives à un terminal ou plus précisément à une session de communication, est alors défini par le dispositif de contrôle au moyen de règles dites de traitement ou de transfert, transmises à ces équipements. Ces règles sont stockées par les équipements du réseau dans des tables dites de flux (ou « flow tables » en anglais) et sont destinées à être appliquées par ceux-ci sur réception de paquets ou de flux de données. Elles spécifient notamment les équipements du réseau vers lesquels transférer les données (i.e. le trafic) en liaisons montante et descendante.

La **figure 2** résume ce mode de fonctionnement en modélisant schématiquement une architecture SDN selon trois couches :
- une couche inférieure DP, modélisant le plan de données et comprenant des équipements D de réseau commandés (contrôlés) par le dispositif de contrôle (ces équipements D peuvent être indifféremment physiques ou virtuels) ;
- une couche intermédiaire NW CTRL, modélisant à proprement parler le dispositif de contrôle logiciel référencé par « OpenCTR » ; et
- une couche supérieure APPL, modélisant diverses applications ou fonctions de contrôle APP utilisées par le dispositif de contrôle OpenCTR pour commander les équipements de réseau D du plan de données DP et élaborer les règles de traitement.

Les différentes couches précitées communiquent entre elles via des interfaces de programmation ou API appelées « NorthBound API » et « SouthBound API» (notées respectivement « NB API» et « SB API» sur la figure 2).

Les interfaces de programmation SB API entre le dispositif de contrôle OpenCTR et le plan de données implémentent ici le protocole de communication OpenFlow™.

Conformément à l'invention, le plan usager s'appuie sur des passerelles d'interconnexion du cœur de réseau IP avec des réseaux externes, des commutateurs connectés à ces passerelles, et des stations de base d'un ou plusieurs réseaux d'accès connectées aux commutateurs. Une interface de programmation SB API implémentant le protocole de communication OpenFlow™ est en effet prévue conformément à l'invention entre le dispositif de contrôle OpenCTR et les stations de base. Par souci de simplification dans la suite de la description, on inclut dans les équipements de réseau D contrôlés par le dispositif de contrôle OpenCTR à l'aide du protocole OpenFlow™, les passerelles d'interconnexion, les commutateurs et les stations de base.

Les interfaces de programmation NB API peuvent implémenter n'importe quel protocole de communication ouvert. Dans le mode de réalisation décrit ici, elles sont basées sur le protocole de communication XMPP comme précisé plus en détail ultérieurement.

Comme rappelé précédemment et illustré à la **figure 3****,** le protocole OpenFlow™ permet au dispositif de contrôle logiciel OpenCTR de commander aisément chaque équipement D de réseau (passerelles d'interconnexion, commutateurs et stations de base) au moyen d'un ensemble de règles de traitement de données, incluant notamment des règles de transfert (ou de routage) de données destinées à être appliquées par l'équipement de réseau sur réception de données relatives à une session de communication (autrement dit, échangées lors d'une session de communication).

Ces règles de traitement sont déterminées par le dispositif de contrôle OpenCTR en fonction par exemple de la politique de l'opérateur envisagée pour la gestion du réseau. Elles spécifient le traitement devant être appliqué par chaque équipement sur réception d'un paquet d'un flux de données associé à une session de communication d'un terminal, et des paquets suivants associés au même flux.

Ces règles de traitement sont stockées au niveau de chaque équipement de réseau D sous la forme de tables de flux FTAB, dont les entrées peuvent être aisément modifiées par le dispositif de contrôle OpenCTR à l'aide du protocole OpenFlow™ (ex. ajout, mise à jour, suppression d'entrées dans la table).

A titre illustratif, une entrée E d'une telle table de flux FTAB est représentée sur la figure 3. Elle se présente sous la forme de plusieurs champs ou paramètres destinés à être examinés par l'équipement de réseau D sur réception d'un paquet de données, en vue d'identifier quel traitement appliquer sur ce paquet (par exemple vers quel équipement du cœur de réseau ou du réseau d'accès transférer ce paquet).

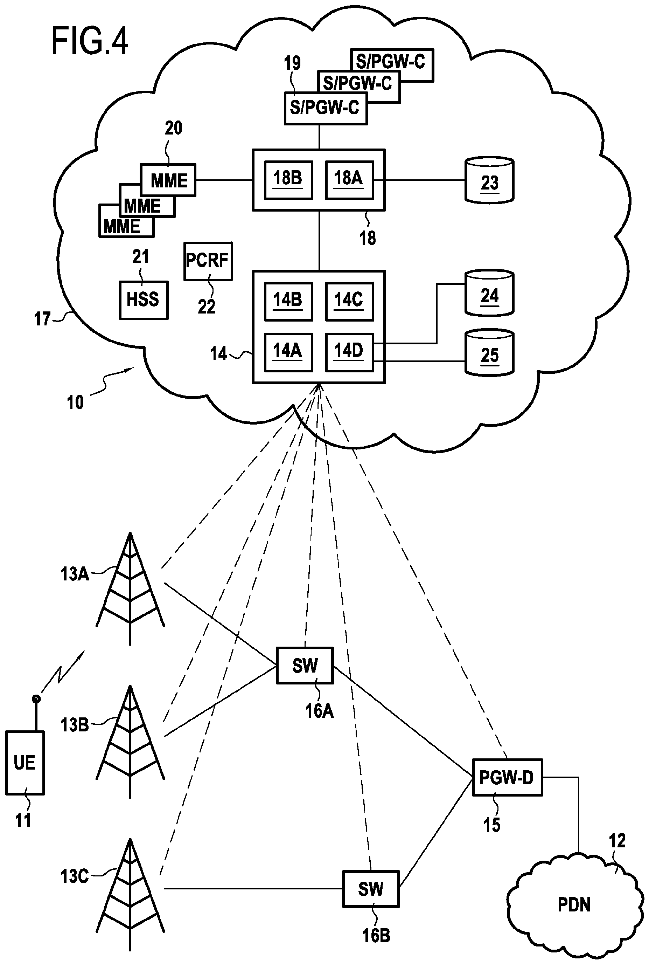

Ces champs incluent par exemple des champs d'adresses sources et/ou destinataires, tels que des adresses MAC (Médium Access Control), MACsrc et MACdest, et/ou des adresses IP, IPsrc et IPdest. Un ou plusieurs champs peu(ven)t être spécifié(s) pour chaque entrée. Il(s) spécifie(nt) les adresses qui doivent être présentes dans l'entête des paquets auxquels se rapporte cette entrée E de la table de flux. Chaque entrée E de la table spécifie également un champ ACTION définissant le traitement à appliquer sur les paquets correspondant à cette entrée E. D'autres champs peuvent bien entendu être également définis pour chaque entrée de la table FTAB en sus des champs précités, comme illustré sur la figure 4, tels que par exemple un champ CNT (pour « Counter »), un champ définissant un port d'entrée et/ou de sortie, etc.

L'équipement de réseau D utilise les tables de flux FTAB ainsi définies de la façon suivante.

Sur réception d'un paquet de données, il cherche dans les tables FTAB stockées si le(s) champ(s) MACsrc, MACdest, IPsrc, IPdest spécifié(s) d'une entrée coïncide avec le(s) champs de l'entête de ce paquet.

Le cas échéant, les instructions associées à cette entrée indiquées dans le champ ACTION sont exécutées par l'équipement de réseau D sur le paquet de données (ex. transférer le paquet vers un équipement déterminé du réseau, ou modifier ou supprimer le paquet).

Si en revanche, aucune entrée ne coïncide avec l'entête du paquet reçu, celui-ci est transféré vers le dispositif de contrôle OpenCTR qui crée une nouvelle entrée de table de flux et un traitement associé à cette entrée (autrement dit une nouvelle règle de traitement), et la transmet à l'équipement de réseau D pour qu'il la stocke dans une table de flux.

Les plans de contrôle et de données au sein de l'architecture SDN sont ainsi bien découplés.

Nous allons maintenant décrire, en référence aux figures 4 à 7, comment l'invention propose avantageusement d'appliquer ce principe à une architecture de cœur de réseau IP, et plus particulièrement à une architecture de cœur de réseau LTE/EPC.

Par souci de simplification de l'exposé, lorsqu'aucune précision n'est apportée dans la description, les fonctions et les modes de fonctionnement des équipements de réseau considérés (en particulier des stations de bases de type eNodeB, des terminaux mobiles de type UE, des serveurs HSS (Home Subscriber Server) et PCRF (Policy and Charging Rules Function), etc.) sont similaires ou identiques à ceux décrits dans le document 3GPP TS 23.401 édité par le 3GPP et ne sont pas détaillés davantage ici. L'invention ne se limite toutefois pas aux seuls réseaux de télécommunications LTE et peut être également appliquée à d'autres architectures de cœurs de réseau basés sur le protocole IP (« all IP networks »), tels que par exemple une architecture de cœur de réseau IP propriétaire.

La **figure 4** représente un cœur de réseau 10 conforme à l'invention, dans un mode particulier de réalisation dans lequel ce cœur de réseau permet à un terminal UE 11 d'accéder à des services offerts par un réseau externe de paquets de données PDN 12. Ce réseau PDN 12 est par exemple le réseau public Internet. Par souci de simplification, on considère un unique réseau externe.

On suppose ici, que pour accéder à ces services, le terminal UE 11 est connecté à une station de base 13A (typiquement une station eNodeB) d'un réseau d'accès tel que par exemple un réseau de télécommunications mobiles UMTS. Aucune limitation n'est toutefois attachée à la nature du réseau d'accès utilisé par le terminal UE 11 dès lors que celui-ci est compatible avec le cœur de réseau 10.

Conformément à l'invention et aux principes du SDN rappelés précédemment, les plans de contrôle et de données sont découplés dans le cœur de réseau 10. Ce découplage est assuré par un dispositif de contrôle 14 conforme à l'invention, reprenant les principes de fonctionnement du dispositif de contrôle OpenCTR précédemment décrits en référence aux figures 2 et 3.

Ce dispositif de contrôle 14 commande différents équipements du cœur de réseau 10 participant au plan usager, à savoir :
- une (ou plusieurs) passerelle(s) d'interconnexion 15 vers le réseau externe de paquets de données PDN 12 ; et
- une pluralité de commutateurs 16A, 16B et 16C connectés à la passerelle d'interconnexion 15 et opérant au niveau de la couche 2 du modèle OSI, chaque commutateur 16A, 16B et 16C (plus généralement désigné par la référence 16) étant connecté à une ou plusieurs stations de base du réseau d'accès désignée(s) généralement par la référence 13. Ainsi, dans l'exemple illustré à la figure 4, le commutateur 16A est relié aux stations de base 13A et 13B et le commutateur 16B est relié à la station de base 13C.

Le dispositif de contrôle 14 commande également, conformément à l'invention, les stations de base 13 (13A, 13B et 13C sur la figure 4) connectées aux commutateurs 16 du cœur de réseau IP 10.

Bien entendu, aucune limitation n'est attachée au nombre de commutateurs reliés à la passerelle d'interconnexion au réseau externe ni au nombre de stations de base connectées à ces commutateurs.

Le dispositif de contrôle 14 commande ces différents équipements de réseau par l'intermédiaire d'un module de commande 14A. Plus précisément, il établit par le biais de ce module de commande 14A un plan usager pour les flux de données relatifs à un terminal géré par le cœur de réseau 10 en définissant des règles de traitement devant être appliquées par la passerelle d'interconnexion 15, les commutateurs 16 et les stations de base 13 aux paquets de données qu'ils reçoivent en liaisons montante et descendante pour ce terminal. Ces règles de traitement sont fournies par le dispositif de contrôle 14 aux équipements de réseau qu'il contrôle en s'appuyant sur le protocole OpenFlow™.

Les règles de traitement fournies par le dispositif de contrôle 14 sont stockées au niveau de chaque équipement de réseau (i.e. commutateurs 16, passerelle d'interconnexion 15 et stations de base 13) dans des tables de flux (non représentées sur la figure 4), dont les entrées peuvent être aisément modifiées (ex. ajout, mise à jour, suppression d'entrées dans la table) par le module de commande 14A à l'aide du protocole OpenFlow™. Ces tables sont similaires ou identiques aux tables FTAB décrites précédemment en référence à la figure 3.

Les règles de traitement utilisées par le dispositif de contrôle 14 pour commander les équipements du réseau 13, 15 et 16 sont ici des règles de transfert des paquets de données IP reçus par ces équipements identifiant en fonction de différents critères vérifiés par l'entête de ces paquets (ex. adresse MAC ou IP source ou destinataire, comme illustré à la figure 3), l'équipement du réseau vers lequel transférer ces paquets.

Ainsi, selon un premier exemple, pour la passerelle d'interconnexion 15, une telle règle de traitement identifie l'un des commutateurs 16A, 16B et 16C vers lequel transférer un paquet de données (ou plus généralement un flux de données) en fonction des champs présents dans son entête lorsque celui-ci est reçu en liaison descendante.

Selon un deuxième exemple, pour le commutateur 16A, une telle règle de traitement identifie la passerelle d'interconnexion 15 vers laquelle transférer un paquet en liaison montante, et, la station de base 13A ou 13B du réseau d'accès vers laquelle transférer un paquet de données en liaison descendante.

Enfin, selon un troisième exemple, pour une station de base 13A ou 13B du réseau d'accès, une telle règle de traitement identifie le commutateur 16A vers lequel transférer en liaison montante un paquet reçu d'un terminal servi par cette station de base.

La passerelle d'interconnexion 15, les commutateurs 16 et les stations de base 13 sont par ailleurs aptes à solliciter le dispositif de contrôle 14 via un message du protocole OpenFlow™, lorsqu'ils reçoivent un paquet de données ne correspondant à aucune entrée de leurs tables de flux respectives. Sur réception de ce message, le dispositif de contrôle 14 par l'intermédiaire de son module de commande 14A, crée une règle de traitement appropriée et met à jour les tables de flux des équipements de réseau concernés.

Conformément à l'invention, les fonctions de contrôle des commutateurs 16 et de la passerelle d'interconnexion 15 sont séparées des fonctions de transfert de données mises en œuvre par ces équipements. Conformément au principe SDN, ces fonctions de contrôle s'exécutent au-dessus du dispositif de contrôle logiciel 14. Plus précisément, conformément à l'invention, ces fonctions définissant le plan de contrôle du cœur de réseau IP 10 sont des fonctions virtuelles instanciées sur des machines virtuelles d'un système informatique en nuage 17. Ces fonctions virtuelles communiquent avec le dispositif de contrôle 14, et plus spécifiquement avec un module de communication 14B du dispositif de contrôle 14, par l'intermédiaire d'un serveur de connexion XMPP 18.

Afin de mieux illustrer cette séparation des plans usager et de contrôle mise en œuvre par l'invention, la fonction rassemblant les fonctions de contrôle de la passerelle d'interconnexion et des commutateurs est référencée par « S/PGW-C 19 » sur la figure 4 et dans la description. Pour leur part, les équipements appliquant dans le plan usager les fonctions de transfert de données des commutateurs et des passerelles d'interconnexion sont référencés respectivement par « SW » et par « PGW-D ». Il convient de noter que dans le mode de réalisation décrit ici, le plan de contrôle de la passerelle d'interconnexion 15 et des commutateurs 16 connectés à cette passerelle est assuré par une même fonction virtuelle S/PGW-C instanciée sur une machine virtuelle. En revanche, on peut envisager comme représenté à la figure 4 plusieurs fonctions virtuelles distinctes susceptibles de contrôler la passerelle d'interconnexion 15 et les commutateurs 16 qui lui sont connectés.

En variante, des fonctions virtuelles distinctes et/ou instanciées sur des machines virtuelles différentes peuvent être envisagées pour contrôler d'une part la passerelle d'interconnexion 15 (fonction virtuelle PGW-C) et d'autres part les commutateurs 16 qui lui sont connectés (fonction virtuelle SGW-C).

Le dispositif de contrôle 14, via ses interactions avec les fonctions 19 de contrôle virtuelles S/PGW-C, centralise ainsi l'intelligence réseau des commutateurs 16 et de la passerelle d'interconnexion 15, et détermine les règles de traitement devant être appliquées aux paquets de données reçus par ceux-ci et par les stations de base 13. A cet effet, il s'appuie sur un ensemble de processus de contrôle mis en œuvre notamment par les fonctions de contrôle virtuelles instanciées dans le système informatique en nuage 17, ainsi que par d'autres modules du dispositif de contrôle 14, comme par exemple, un module de gestion de la topologie du réseau, un module de gestion de la qualité de service, un module d'équilibre de la charge, un module de gestion du routage dans le réseau, etc., dont les fonctions sont connues en soi. Ces modules sont regroupés sur la figure sous la référence 14C et désignés par « modules de contrôle » dans la suite de la description, par souci de simplification. Ils sont garants en particulier de certains attributs spécifiques aux utilisateurs ou aux services gérés par le cœur de réseau IP, notamment en termes de sécurité, mobilité, application de politiques fixées par l'opérateur, etc.

D'autres fonctions virtuelles peuvent être instanciées dans le système informatique en nuage 17 et assurent des fonctions classiques du plan de contrôle du cœur de réseau IP. Il s'agit notamment ici d'une pluralité de fonctions virtuelles MME 20 de gestion de la mobilité des terminaux dans le cœur de réseau IP, d'une fonction virtuelle 21 de serveur HSS, et d'une fonction virtuelle 22 de serveur PCRF. Il convient de noter que les fonctions virtuelles MME 20 se distinguent des fonctions des entités MME telles que définies dans le standard LTE en ce qu'elles ne sont pas responsables ici de la sélection des commutateurs 16 et/ou de la passerelle d'interconnexion 15 définissant le plan usager associé à un terminal. Cette sélection est assurée, comme détaillée davantage ultérieurement, par le dispositif de contrôle 14 lui-même au moyen de ses modules de contrôle 14C notamment.

Dans le mode de réalisation décrit ici, certaines des fonctions virtuelles instanciées dans le système informatique en nuage 17 communiquent entre elles par l'intermédiaire des interfaces décrites dans le standard LTE. Ainsi, à titre d'exemple, les fonctions virtuelles MME 20 et la fonction virtuelle 21 de serveur HSS communiquent selon une interface S6a telle que définie dans le document 3GPP TS 29.272 intitulé « Technical Specification Group Core Network and Terminais; Evolved Packet System (EPS); Mobility Management Entity (MME) and Serving GPRS Support Node (SGSN) related interfaces based on Diameter protocol », Release 12, v12.5.0, juin 2014. De manière similaire, la fonction virtuelle 22 du serveur PCRF communique avec les fonctions virtuelles S/PGW-C 19 selon une interface Gx telle que définie dans le document 3GPP TS 29.210 intitulé « Technical Specification Group Core Network and Terminais; Charging rule provisionning over Gx interface, version 6.7.0. ».

D'autres fonctions virtuelles instanciées dans le système informatique en nuage 17 communiquent entre elles via le serveur de connexion XMPP 18 en utilisant le protocole de communication XMPP.

Plus précisément ici, les fonctions virtuelles de contrôle S/PGW-C 19 et les fonctions virtuelles MME 20 de gestion de la mobilité des terminaux sont des clients du serveur de connexion XMPP 18 au même titre que le dispositif de contrôle 14. Autrement dit, cela signifie que les fonctions virtuelles 19 et 20 et le dispositif de contrôle 14 communiquent entre eux par l'intermédiaire d'un canal de communication direct et dédié, établi par le serveur XMPP 18, et en utilisant sur ce canal le protocole XMPP. Le serveur XMPP 18 communique avec les fonctions virtuelles 19 et 20 et le dispositif de contrôle 14 par l'intermédiaire d'un module de communication 18B apte à mettre en œuvre le protocole XMPP, et selon un mode de communication client-serveur bien connu en soi (i.e. sous forme d'échanges de requêtes des clients et de réponses du serveur à ces requêtes).

Le serveur XMPP 18 est un serveur de connexion au système informatique en nuage 17 conforme à l'invention. Il est configuré pour authentifier ses clients (autrement dit ici, les fonctions virtuelles de contrôle 19 et 20 et le dispositif de contrôle 14) et refuser l'accès au système informatique en nuage 17 et à ses services aux utilisateurs (clients) non autorisés. Il maintient en outre, au moyen d'un module de gestion de base de données 18A, une base de données clients 23 contenant des informations relatives à ces derniers. Par base de données, on entend ici tout type de structure dans laquelle sont stockées des données (ex. une table, vecteur, etc.).

Ainsi, notamment, la base de données clients 23 contient ici pour chaque client du serveur XMPP 18 :
- un identifiant unique de ce client auprès du serveur XMPP 18 : cet identifiant est plus communément appelé un « Jabber ID » ou encore une adresse Jabber ; et
- au moins un état de ce client. Dans le mode de réalisation décrit ici, le serveur XMPP 18 stocke dans la base de données clients 23 un état de disponibilité et un état de charge courants du client considéré. Ces états sont obtenus grâce au protocole XMPP mis en œuvre par le serveur 18 et conformément au fonctionnement classique d'un serveur XMPP.

Conformément à l'invention, le serveur XMPP 18 est configuré pour transmettre, par l'intermédiaire de son module de communication 18B, des informations (données) stockées dans la base de données clients 23 au dispositif de contrôle 14 afin de lui permettre d'établir et de contrôler un plan usager pour un terminal géré par le cœur de réseau IP, et de traiter les messages relatifs à ce terminal échangés dans ce plan usager.

Ces informations permettent au dispositif de contrôle 14 de maintenir à jour, par l'intermédiaire d'un module de gestion de base de données 14D, une base de données 24 dite de contrôle comprenant, pour chaque fonction virtuelle MME 20 et S/PGW-C 19, un identifiant de cette fonction auprès du serveur XMPP 18 (ici, le Jabber ID alloué de façon unique à cette fonction par le serveur XMPP 19) et au moins un état de cette fonction. Dans l'exemple envisagé ici, la base de données 24 contient un état de disponibilité et un état de charge courant de chaque fonction virtuelle 19 et 20.

En outre, dans le mode de réalisation décrit ici, la base de données 24 contient également pour chaque fonction virtuelle identifiée dans la base, les identifiants des terminaux gérés par le cœur de réseau IP 10 auxquels est allouée cette fonction.

Le dispositif de contrôle 14, par le biais de son module de gestion 14D de base de données, maintient également à jour une base de données dite utilisateurs 25 identifiant pour au moins un terminal d'un utilisateur géré par le cœur de réseau IP 10, les fonctions virtuelles parmi les fonctions 19 et 20 instanciées dans le système informatique en nuage 17 allouées à ce terminal.

Dans le mode de réalisation décrit ici, la base de données utilisateurs 25 comprend également pour au moins un terminal identifié dans la base, un ou plusieurs paramètres de communication destinés à être utilisés pour un transfert de données dans un plan usager établi pour ce terminal entre une station de base 13 servant ce terminal et la passerelle d'interconnexion 15. Ces paramètres de communication comprennent notamment ici une adresse du commutateur 16 connecté à la station de base 13 servant le terminal, une adresse de la passerelle d'interconnexion 15, et des identifiants de points d'extrémité d'un tunnel de communication établi entre la station de base 13 et la passerelle 16 pour le transfert des données, ces identifiants ayant été attribués au terminal par la station de base 13 et par la fonction de contrôle virtuelle 19 de la passerelle d'interconnexion 16 respectivement.

Il convient de noter que conformément à l'invention, le plan usager établi par le dispositif de contrôle 14 s'appuie sur des commutateurs 16 plutôt que sur des passerelles de transfert de données de type SGW telle que définie dans l'architecture LTE/EPC du standard 3GPP. L'utilisation de commutateurs opérant au niveau de la couche 2 du modèle OSI (Open Systems Interconnection)) permet d'échanger directement dans le plan usager des paquets de données IP entre d'une part les stations de base 13 et les commutateurs 16, et d'autre part, entre les commutateurs 16 et la passerelle d'interconnexion 15. De ce fait, grâce à l'invention, on peut se contenter d'établir un unique tunnel de communication GTP entre une station de base 13 et une passerelle d'interconnexion 16, au lieu de deux tunnels GTP distincts entre la station de base 13 et le commutateur 16 auquel elle est reliée, puis entre le commutateur 16 et la passerelle d'interconnexion 15 auquel le commutateur 16 est relié.

Ce tunnel de communication unique est défini (i.e. identifié) par différents paramètres de communication tels que notamment des identifiants de points d'extrémité du tunnel ou TEID (Tunnel Endpoint IDentifier), ainsi qu'une adresse IP (Internet Protocol) de la passerelle 15, une adresse IP du commutateur 16 et des numéros de port UDP (User Datagram Protocol) de ces équipements. En permettant l'établissement d'un unique tunnel de communication entre la station de base 13 et la passerelle d'interconnexion 15, l'invention résulte en un gain en termes de signalisation échangée sur le cœur de réseau.

Dans le mode de réalisation décrit ici, le dispositif de contrôle 14 et le serveur XMPP 18 sont des entités logicielles, autrement dit des applications ou des programmes d'ordinateur, qui s'exécutent sur des dispositifs informatiques ou ordinateurs 26 et 27 respectivement.

La **figure 5A** illustre schématiquement l'architecture matérielle du dispositif informatique 26 implémentant le dispositif de contrôle 14. Ce dispositif informatique 26 comprend un processeur 26A, une mémoire morte 26B, une mémoire vive 26C, une mémoire non volatile 26D et des moyens de communication 26E. Ces moyens de communication 26E sont aptes en particulier à communiquer :
- avec les stations de base 13, avec les commutateurs 16 et avec les passerelles d'interconnexion 15 selon le protocole OpenFlow™ ; et
- avec le serveur XMPP 18, et par le biais de ce serveur, avec les fonctions virtuelles 19 et 20 du plan de contrôle selon le protocole XMPP.

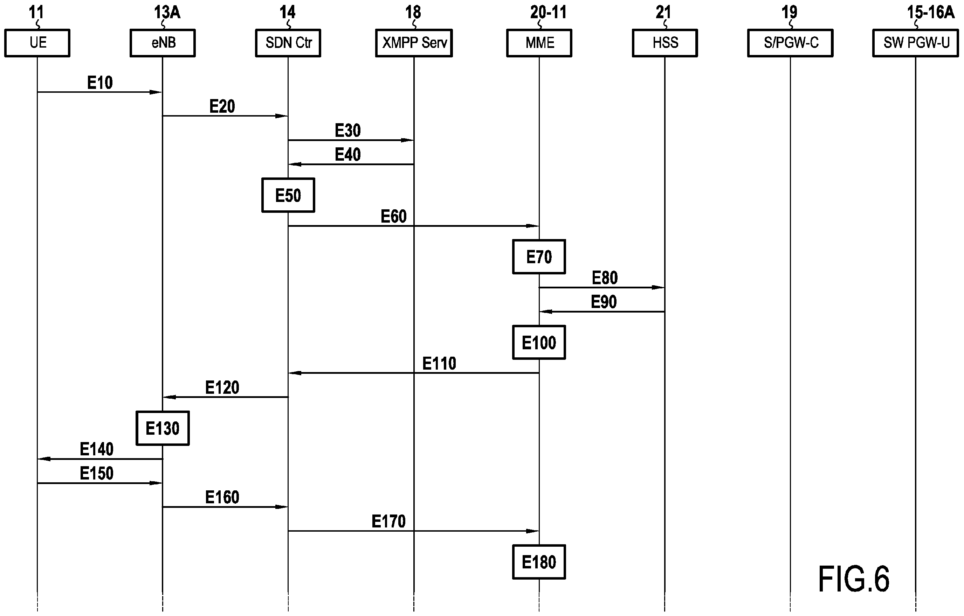

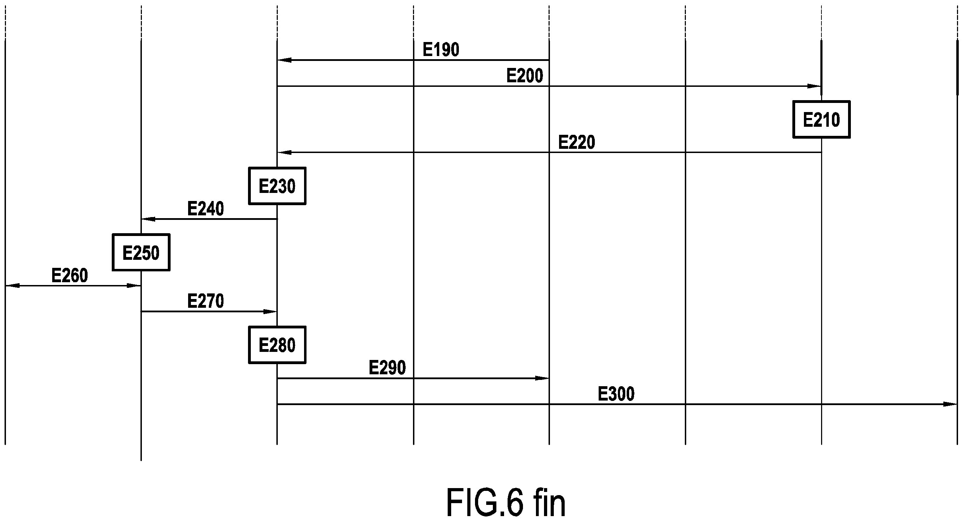

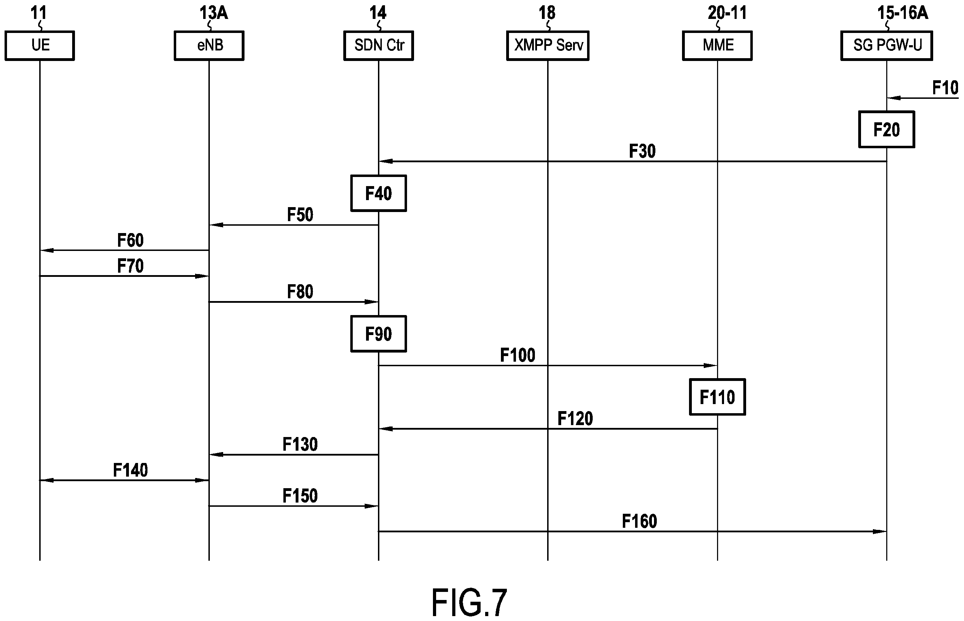

La mémoire morte 26B du dispositif informatique 26 constitue un support d'enregistrement conforme à l'invention, lisible par le processeur 26A et sur lequel est enregistré un programme d'ordinateur conforme à l'invention comportant des instructions pour l'exécution des étapes d'un procédé de contrôle selon l'invention dont les étapes sont illustrées ultérieurement en référence aux figures 6 et 7. Ce programme d'ordinateur définit de façon équivalente les modules fonctionnels 14A, 14B, 14C et 14D du dispositif de contrôle 14 décrits précédemment.

La **figure 5B** illustre schématiquement l'architecture matérielle d'un dispositif informatique 27 implémentant le serveur XMPP 18. Ce dispositif informatique 27 comprend un processeur 27A, une mémoire morte 27B, une mémoire vive 27C, une mémoire non volatile 27D et des moyens de communication 27E. Ces moyens de communication 27E sont aptes en particulier à communiquer avec le dispositif de contrôle 14 et avec les fonctions virtuelles 19 et 20 en utilisant le protocole XMPP.

La mémoire morte 27B du dispositif informatique 27 constitue un support d'enregistrement conforme à l'invention, lisible par le processeur 27A et sur lequel est enregistré un programme d'ordinateur définissant les modules fonctionnels 18A et 18B du serveur de connexion XMPP 18 décrits précédemment.

Nous allons maintenant illustrer plus en détail la gestion opérée par le cœur de réseau 10 grâce à cette nouvelle architecture proposée par l'invention. Cette gestion est opérée dans le mode de réalisation décrit en s'appuyant et en adaptant la procédure d'identification d'un terminal proposée par le standard LTE ainsi que la procédure d'identification d'une entité cliente par un serveur XMPP.

Plus spécifiquement, on suppose ici que chaque terminal UE 11 géré par le cœur de réseau IP 10 dispose d'un identifiant temporaire unique, tel que par exemple une identité de type GUTI (pour Globally Unique Temporary Identity) telle que définie dans le standard LTE. Cette identité est de façon connue utilisée pour éviter d'exposer et d'échanger fréquemment sur le lien radio l'identité permanente du terminal UE 11, aussi désignée par IMSI (International Mobile Subscriber Identity).

L'identité GUTI est constituée :
- d'une identité GUMMEI (pour Globally Unique MME Identity) qui désigne de façon unique l'entité MME qui a alloué l'identité GUTI au terminal UE 11 ; et
- une identité M-TMSI (pour MME Temporary Mobile Subscriber Identity) qui identifie de manière unique le terminal UE 11 au sein de l'entité MME.

L'identité GUMMEI comprend :
- un identifiant du réseau ou PLMN (pour Public Land Mobile Network) ; et
- un identifiant de MME ou MMEI (pour MME Identifier), qui est constitué d'un identifiant de groupe MME (ou MMEGI pour MME Group Id) et un code MME (ou MMEC pour MME Code). Le code MME constitue un identifiant unique d'une entité MME (fonction virtuelle 20 ici) au sein d'un groupe d'entités MME, et l'identifiant MMEGI désigne un groupe d'entités MME parmi différents groupes d'entités MME.

Conformément à l'invention, les entités MME considérées ici sont les fonctions virtuelles MME 20 décrites précédemment, instanciées dans le système informatique en nuage 17, et connectées au dispositif de contrôle SDN 14 par le biais du serveur XMPP 18. On suppose qu'une pluralité de fonctions virtuelles MME sont ainsi instanciées dans le système informatique en nuage 17 et connectées au même dispositif de contrôle 14.

Lorsque le terminal UE 11 souhaite communiquer avec le cœur de réseau IP 10, il envoie une requête à la station de base 13 qui le sert, cette requête contenant le cas échéant son identité GUTI. Cette requête est transférée au dispositif de contrôle 14 pour traitement. Le dispositif de contrôle 14 extrait alors l'identité GUMMEI de l'identité GUTI contenue dans cette requête et identifie la fonction virtuelle MME 20 allouée au terminal UE 11. Il met à jour sa base de données 25 avec l'identifiant de la fonction virtuelle MME 20 allouée au terminal UE 11.

Le dispositif de contrôle 14 recherche par ailleurs si une adresse IP a déjà été attribuée au terminal UE 11, et le cas échéant identifie la fonction virtuelle S/PGW-C 19 qui lui a allouée en utilisant le préfixe IP. Il met à jour sa base de données 25 avec l'identifiant de la fonction virtuelle S/PGW-C 19 allouée au terminal UE 11.

Si le terminal UE 11 n'est pas attaché au réseau et/ou s'il ne dispose pas d'identité GUTI préalablement attribuée (c'est le cas notamment lorsque le terminal se connecte pour la première fois au cœur de réseau, la requête du terminal ne contenant alors pas de GUTI mais l'identité IMSI du terminal), le dispositif de contrôle 14 sélectionne et alloue une fonction virtuelle MME 20 pour le terminal 11 parmi l'ensemble des fonctions virtuelles MME 20 instanciées dans le système informatique en nuage 17. Cette allocation est réalisée sur la base d'un état courant de disponibilité et/ou de charge des fonctions virtuelles MME 20 transmis par le serveur XMPP 18 ou par un serveur DNS (non représenté sur la figure). La fonction virtuelle MME 20-11 ainsi sélectionnée attribue au terminal UE 11 une identité GUTI contenant l'identité GUMMEI la désignant.

De manière similaire, une fonction virtuelle S/PGW-C 19-11 est sélectionnée et allouée sur la base du même type d'informations pour le terminal UE 11.

Les bases de données 24 et 25 sont mises à jour par le module de gestion 14D du dispositif de contrôle 14 pour refléter l'allocation des fonctions virtuelles 19-11 et 20-11 au terminal UE 11 et l'attribution à ce terminal UE 11 d'un identifiant GUTI correspondant (i.e. la base de données de contrôle 24 identifie maintenant le terminal 11 (par l'intermédiaire de ses identités IMSI et GUTI) parmi les terminaux alloués aux fonctions virtuelles 19-11 et 20-11, et la base de données utilisateurs 25 identifie maintenant les fonctions virtuelles 19-11 et 20-11 à l'aide de leurs adresses Jabber comme étant allouées au terminal 11).

Comme mentionné précédemment, la gestion opérée par le cœur de réseau IP 10 s'appuie également et adapte les procédures existantes d'identification et d'authentification d'une entité cliente par un serveur XMPP.

Dans le système informatique en nuage 17, toute fonction virtuelle et plus généralement toute entité connectée au serveur XMPP 18 est un client de ce serveur identifié par une adresse Jabber (Jabber ID) unique. Une telle adresse est connue en soi et est configurée par le serveur XMPP 18.

Le serveur XMPP 18 met ensuite à jour sa base de données clients 23 avec cette adresse Jabber et la transmet au dispositif de contrôle 14 conformément à l'invention. Si de nouvelles fonctions virtuelles sont instanciées et connectées au serveur XMPP 18 (ex. fonctions virtuelles S/PGW-C 19 et/ou MME 20), ce dernier met à jour sa base de données 23 et transmet les adresses Jabber de ces nouvelles fonctions au dispositif de contrôle 14 pour lui permettre de communiquer avec celles-ci directement. Il convient de noter que bien que cette communication soit considérée comme « directe » dans le sens où le dispositif de contrôle 14 utilise directement les adresses Jabber des fonctions virtuelles connectées au serveur XMPP 18 pour communiquer avec celles-ci, cette communication est orchestrée par l'intermédiaire du serveur XMPP 18, c'est-à-dire qu'elle passe par le serveur XMPP 18 qui oriente la communication vers la fonction virtuelle identifiée de manière unique par l'adresse Jabber fournie par le dispositif de contrôle 14.

Le serveur XMPP 18 ne donne un accès au cœur de réseau IP 10 qu'à des clients autorisés et authentifiés. Quand un nouveau client, telle qu'une nouvelle fonction virtuelle S/PGW-C 19 ou MME 20 est instanciée dans le système informatique en nuage 17, ce nouveau client doit être authentifié et configuré par le serveur XMPP 18.

Durant cette configuration, le client s'enregistre auprès du serveur XMPP 18 avec son adresse Jabber. Plus précisément, il envoie au serveur XMPP 18 un message XMPP IQ-get pour obtenir les champs d'authentification nécessaires à son authentification. Sur réception de ce message, le serveur XMPP 18 envoie un message XMPP IQ-result au client contenant les champs d'authentification requis. Le client envoie au serveur XMPP 18 l'information correspondant aux champs d'authentification dans un message XMPP IQ-get ; cette information comprend par exemple un nom d'utilisateur et un mot de passe. Le mot de passe peut être transmis en l'état ou sous la forme d'un condensé cryptographique obtenu au moyen de l'algorithme connu SHA1 (Secure Hash Algorithm).

Sur réception du message du client (requête d'authentification), le serveur XMPP 18 crée une entrée dans sa base de données clients 23 et met à jour les informations relatives à ce client dans la base (adresse Jabber allouée par l'opérateur du système informatique en nuage, adresse IP, état courant de disponibilité et de charge du client). Il envoie un message XMPP IQ-result notifiant le succès de l'authentification au client. Par ce message, le serveur XMPP 18 et le nouveau client sont configurés et le serveur alloue des ressources au client pour de futures communications. Il maintient ensuite à jour sa base de données clients 23, et en particulier l'état de ses clients.

Nous allons maintenant décrire plus en détail en référence aux figures 6 et 7 deux procédures mises en œuvre par le cœur de réseau 10 en s'appuyant sur l'architecture.

La **figure 6** représente les principales étapes d'une procédure d'établissement d'un plan usager entre une station de base 13A servant un terminal UE 11 d'un utilisateur et une passerelle d'interconnexion 15 du cœur de réseau IP 10 à un réseau externe PDN 12, pour permettre à ce terminal de communiquer (autrement dit d'émettre ou de recevoir des données).

L'établissement d'un plan usager consiste à enregistrer le terminal UE 11 auprès du cœur de réseau IP 10 et à établir un support de communication (ou « bearer ») entre la station de base 13 et la passerelle d'interconnexion 15 pour qu'il puisse émettre et recevoir des paquets de données IP, et disposer ainsi d'une connectivité IP avec le réseau de paquets externe PDN 12. Généralement, cette procédure est mise en œuvre à l'allumage du terminal UE 11.

On suppose donc que le terminal UE 11 envoie à la station de base 13A dont il dépend (c'est-à-dire généralement la station de base qui sert la cellule dans laquelle il se trouve), une requête d'attachement au cœur de réseau 10 (étape E10). Cette requête comprend une requête de connectivité au réseau externe PDN 12 et les identités du terminal UE 11, notamment son identité permanente IMSI et le cas échéant, son identité temporaire GUTI.

La station de base 13A encapsule cette requête dans un message PACKET_IN conforme au protocole OpenFlow™ et l'envoie au dispositif de contrôle 14 (étape E20). Dans ce message, la station de base 13A inclut également un identifiant du terminal UE 11, noté eNB_OF_UE11_ID, utilisé pour identifier de manière unique le terminal UE 11 entre la station de base 13A et le dispositif de contrôle 14. Cet identifiant est par exemple similaire à l'identifiant S1-AP UE utilisé dans le standard 3GPP.

Sur réception du message PACKET_IN, le dispositif de contrôle 14 extrait la requête du terminal UE 11 les identifiants IMSI et le cas échéant GUTI de ce dernier et consulte sa base de données utilisateurs 25 à partir de ce ou ces identifiants.

On suppose ici qu'aucune entrée correspondant au terminal UE 11 (IMSI ou GUTI) n'existe dans la base de données 25.

Le dispositif de contrôle 14 envoie alors, par l'intermédiaire de son module de communication 14B, une requête IQ-get conforme au protocole XMPP au serveur XMPP 18 (étape E30).

Le serveur XMPP 18 consulte sa base de données clients 23 et répond à cette requête en transmettant au dispositif de contrôle 14 les fonctions virtuelles MME 20 disponibles instanciées dans le système informatique en nuage 17 (i.e. un identifiant de ces fonctions tel que leur adresse Jabber), ainsi que leur état de charge courant (étape E40).

Le dispositif de contrôle 14 crée alors une entrée dans sa base de données utilisateurs 25 pour le terminal UE 11 à laquelle il associe l'IMSI du terminal UE 11.

Il sélectionne par ailleurs pour le terminal UE 11, en utilisant ses modules de contrôle 14C, une fonction virtuelle MME référencée par 20-11 parmi les fonctions virtuelles MME 20 disponibles en fonction notamment de leurs charges courantes et éventuellement d'autres paramètres tels que par exemple la localisation géographique du terminal.

Le dispositif de contrôle 14 alloue la fonction virtuelle MME 20-11 ainsi sélectionnée au terminal UE 11 et met à jour, via son module de gestion de base de données 14D, la base de données 25 avec l'adresse Jabber de la fonction virtuelle MME 20-11 (étape E50). Il met également à jour la base de données 24 en associant à la fonction virtuelle MME 20-11 l'identité IMSI du terminal UE 11.

Puis le dispositif de contrôle 14 émet directement, par l'intermédiaire de son module de communication 14B, une requête XMPP IQ-get vers la fonction virtuelle MME 20-11 (étape E60). Cette requête utilise l'adresse Jabber de la fonction virtuelle MME 20-11 et transite par le serveur XMPP 18 de façon connue en soi comme mentionné précédemment. Cette requête contient tous les paramètres d'attachement classiques d'un terminal à un cœur de réseau, comme notamment les identités IMSI et GUTI du terminal, etc., ainsi que l'adresse Jabber du dispositif de contrôle 14.

Sur réception de cette requête, la fonction virtuelle MME 20-11 allouée au terminal UE 11 vérifie si le terminal UE 11 est identifié dans sa base de données (étape E70).

On suppose ici que le terminal UE 11 n'est pas identifié dans la base de données de la fonction virtuelle MME 20-11.

La fonction virtuelle MME 20-11 envoie alors un message d'authentification à la fonction virtuelle de serveur HSS 21 pour obtenir à partir de l'identité IMSI du terminal UE 11, les identités et paramètres d'authentification alloués au terminal UE 11 par le cœur de réseau IP 10 (ex. GUTI, adresse IP, station de base à laquelle le terminal est attaché, clés de protection de l'intégrité et de chiffrement pour la couche réseau NAS (couche réseau Non-Access Stratum de communication entre le terminal UE et l'entité MME dans le modèle LTE), etc.) (étape E80). Pour rappel, la fonction virtuelle MME 20-11 et la fonction virtuelle HSS 21 communiquent ici entre elles selon l'interface S6a définie dans le standard LTE.

La fonction virtuelle HSS 21 dérive les identités et les paramètres d'authentification du terminal UE 11, et les transmet à la fonction virtuelle MME 20-11 dans un message de réponse (étape E90).

De façon connue, la fonction virtuelle MME 20-1 extrait du message de réponse les identités et les paramètres d'authentification du terminal UE 11 et les stocke dans sa base de données (étape E100).

Les clés NAS sont alors envoyées dans un message de réponse XMPP IQ-result au dispositif de contrôle 14 (étape E110). Ce message inclut également une requête d'authentification du terminal UE 11.

Le dispositif de contrôle 14 transmet par l'intermédiaire de son module de communication 14A la requête d'authentification à la station de base 13A (étape E120). Cette requête est encapsulée dans un message OpenFlow™ PACKET_OUT et contient un identifiant CONT_OF_UE11_ID identifiant de manière unique le terminal UE 11 sur l'interface entre la station de base 13A et le dispositif de contrôle 14, ainsi que l'identifiant eNB_OF_UE11_ID.

La station de base 13A identifie le terminal UE 11 à partir de l'identifiant eNB_OF_UE11_ID et met à jour sa base de données utilisateurs avec l'identifiant CONT_OF_UE11_ID (étape E130).

On note que les identifiants eNB_OF_UE11_ID et CONT_OF_UE11_ID permettent avantageusement de pouvoir utiliser une même interface entre la station de base 13A et le dispositif de contrôle 14 pour la pluralité de terminaux UE servis par la station de base, le dispositif de contrôle 14 étant lui-même connecté à une pluralité de stations de base. Ces identifiants permettent au dispositif de contrôle 14 de différencier les messages provenant et destinés à une station de base spécifique, pour et/ou en provenance d'un terminal UE donné. De même, ils permettent à une station de base de différencier facilement les terminaux.

Puis, la station de base 13A extrait la requête d'authentification en provenance de la fonction MME 20-11 contenue dans le message PACKET_OUT et la relaie vers le terminal UE 11 (étape E140).

Le terminal UE 11 transmet sa réponse à la requête d'authentification à la station de base 13A (étape E150).

Cette réponse est relayée par la station de base 13A au dispositif de contrôle 14, encapsulée dans un message OpenFlow™ PACKET_IN (étape E160).

Le dispositif de contrôle 14 relaie à son tour la réponse du terminal UE 11 vers la fonction virtuelle MME 20-11 dans un message XMPP IQ-set par l'intermédiaire de son module de communication 14B (étape E170).

Sur réception du message IQ-set, la fonction virtuelle MME 20-11 compare les informations fournies par le terminal UE 11 (ex. clés NAS) avec les paramètres d'authentification transmis par la fonction virtuelle HSS 21 au cours de l'étape E90 (étape E180).

Si les paramètres correspondent, la fonction virtuelle MME 20-11 authentifie le terminal UE 11. Sinon elle rejette la requête du terminal.

On suppose ici que les paramètres coïncident, autrement dit le terminal UE 11 est authentifié avec succès. La fonction virtuelle MME 20-11 envoie alors un message XMPP IQ-result au dispositif de contrôle 14 pour établir un plan usager pour ce terminal (étape E190).

Le dispositif de contrôle 14 envoie alors, par l'intermédiaire du serveur XMPP 18, un message XMPP IQ-get à la fonction virtuelle S/PGW-C 19 allouée au terminal UE 11 selon sa base de données utilisateurs 25 comme mentionné précédemment, en vue d'établir un tunnel de communication GTP pour les sessions de communication du terminal UE (étape E200). La fonction virtuelle S/PGW-C 19 allouée au terminal UE 11 est par la suite désignée par la référence 19-11.

La fonction virtuelle S/PWG-C 19-11 sélectionne un commutateur 16A et une passerelle d'interconnexion 15 pour le plan usager sur la base d'informations de charge de ces équipements de réseau (étape E210). Ces informations de charge sont par exemple obtenues en utilisant l'interface Gx entre la fonctionne virtuelle S/PWG-C 19-11 et la fonction virtuelle PCRF 22. Elle crée par ailleurs des paramètres de communication identifiant un tunnel de communication entre la station de base 13A et la passerelle 15 pour les communications du terminal UE 11 en liaison montante. Ces paramètres de communication comprennent notamment un identifiant de point d'extrémité du tunnel ou TEID.

En outre, la fonction virtuelle S/PWG-C 19-11 extrait l'adresse IP du terminal d'un serveur DHCP (non représenté) et la qualité de service du support de communication (bearer) en interrogeant via l'interface Gx, la fonction virtuelle PCRF 22. Le serveur DHCP peut être implémenté à l'aide d'une fonction virtuelle instanciée dans le système informatique en nuage 7 ou être intégrée dans une fonction virtuelle S/PWG-C déjà instanciée.

La fonction virtuelle S/PWG-C 19-11 transmet un message de réponse XMPP IQ-result au dispositif de contrôle 14 comprenant l'identifiant TEID alloué par la fonction virtuelle S/PGW-C 19-11, les adresses IP du commutateur 16A et de la passerelle d'interconnexion 15, l'adresse IP du terminal UE 11 et la qualité de service du support de communication (étape E220).

Le dispositif de contrôle 14 met à jour, via son module de gestion de bases de données 14D, la base de données utilisateurs 25 avec les adresses IP du commutateur 16A et de la passerelle d'interconnexion 15, l'adresse IP du terminal UE 11 et l'identifiant TEID du tunnel de communication alloué par la fonction virtuelle S/PGW-C 19-11 (étape E230).

Puis il envoie à la station de base 13A un message OpenFlow™ PACKET_OUT acceptant la requête d'attachement du terminal UE 11 et d'établissement de support de communication (étape E240). Ce message contient les adresses IP du commutateur 16A et de la passerelle d'interconnexion 15 et l'identifiant TEID, stockés dans la base de données utilisateurs 25. Ce message contient une règle de traitement au sens de l'invention destinée à commander la station de base 13A lors de transfert de données destinées au terminal UE 11.

Sur réception du message PACKET_OUT, la station de base 13A met à jour sa table de flux avec la règle de traitement contenu dans le message, autrement dit avec les adresses IP du commutateur 16A, de la passerelle d'interconnexion 15 et l'identifiant de tunnel TEID (étape E250). Ces paramètres définissent un tunnel de communication unique entre la station de base 13A et la passerelle d'interconnexion 15 pour le transfert de données en liaison montante.

La station de base 13A établit alors une connexion RRC (Radio Resource Control) avec le terminal UE 11 (étape E260).

Puis elle crée un identifiant de point d'extrémité de tunnel en liaison descendante et l'envoie au dispositif de contrôle 14 par l'intermédiaire du protocole OpenFlow™ (étape E270).

Le dispositif de contrôle 14 met à jour dans sa base de données utilisateurs 25 les paramètres de communication alloués au terminal UE 11 (étape E280).

Il envoie ces paramètres à la fonction virtuelle MME 20-11 dans un message XMPP IQ-set (étape E290).

Par ailleurs, il commande, par le biais de son module de commande 14A, le commutateur 16A et la passerelle 15 en leur envoyant un message OpenFlow™ PACKET_OUT comprenant des règles de traitement des flux de données relatifs au terminal UE 11 (étape E300). Par exemple, une telle règle peut être de router les flux de données destinés au terminal UE 11 vers la station de base 13A. Le commutateur 16A et la passerelle 15 mettent à jour leurs tables de flux à partir de ces règles de traitement.

Cette étape clôture l'établissement du plan usager pour les communications du terminal UE 11.

Nous allons maintenant décrire, en référence à la **figure 7****,** les principales étapes d'une procédure de traitement d'une requête de service à l'initiative du cœur de réseau 10 et destinée à un terminal UE 11 se trouvant dans un état non actif ou « idle » pour lequel des données ont été reçues par le cœur de réseau (étape F10). Cette procédure comprend l'établissement d'un plan usager permettant au terminal UE 11 de recevoir des données en liaison descendante.

On suppose donc qu'un flux de données destiné au terminal UE 11 a été reçu par le cœur de réseau IP 10 en provenance du réseau externe PDN 12, au niveau de la passerelle d'interconnexion 15 (étape F10).

Dans les architectures de type SDN, les tables de flux maintenues par les équipements du réseau sont généralement de dimensions limitées afin d'optimiser l'espace mémoire de ces équipements. Les entrées de ces tables de flux ont à cet effet une durée de vie limitée : lorsqu'un terminal UE 11 n'utilise pas un service du réseau pendant une période de temps déterminée, le cœur de réseau 10 relâche l'information relative au terminal UE 11 dans le plan utilisateur et au niveau de la station de base 13A qui le servait. Autrement dit, il supprime les règles de traitement relatives aux données destinées au terminal UE 11 stockées dans les tables de flux maintenues par le commutateur 16A, la passerelle d'interconnexion 15 et la station de base 13A.

Ainsi, durant cette période d'inactivité, lorsque le terminal UE 11 reçoit des données en voie descendante en provenance du réseau externe PDN 12 et que la passerelle d'interconnexion 15 avec le réseau externe PDN 12 interroge sa table de flux pour déterminer vers quel équipement de réseau transférer ces données, elle ne trouve aucune règle de traitement à appliquer à ces données (étape F20).

La passerelle d'interconnexion 15 envoie donc une requête au dispositif de contrôle 14, dans un message OpenFlow™ PACKET_IN dans lequel elle insère l'entête du paquet IP reçu pour le terminal UE 11 (étape F30).

Sur réception de ce message, le dispositif de contrôle 14 obtient à l'aide de son module de gestion 14D de base de données les paramètres du terminal UE 11 en interrogeant sa base de données utilisateurs 25 (étape F40). Ces paramètres incluent notamment les paramètres de liste de recherche aussi appelée « tracking area list » (TAL) et l'identité GUTI du terminal UE 11.

Il envoie ensuite un message de radiomessagerie (ou paging en anglais) aux stations de base 13 identifiées dans la liste de recherche selon une procédure connue en soi et implémentée par le module de contrôle correspondant 14C (étape F50). Cette liste de recherche inclut notamment la station de base 13A servant la cellule dans laquelle se trouve le terminal UE 11.

La station de base 13A transmet le message de radiomessagerie au terminal UE 11 (étape F60).

Sur réception de ce message, le terminal UE 11 passe dans un état actif et envoie un message de requête de service à la station de base 13A comprenant ses clés de couche réseau NAS (étape F70).

La station de base 13A relaie ce message dans un message OpenFLow™ au dispositif de contrôle 14 (étape F80).

Le dispositif de contrôle 14 met à jour sa base de données utilisateurs 25 avec l'identifiant de la station de base 13A (étape F90) et envoie la clé NAS à la fonction virtuelle MME 20-11 de gestion de la mobilité allouée au terminal UE 11 selon sa base de données utilisateurs 25 dans un message XMPP IQ-get (étape F100).

La fonction virtuelle MME 20-11 vérifie si la clé fournie par le terminal UE 11 correspond à la clé fournie par la fonction virtuelle de serveur HSS 21, stockée dans sa base de données en association avec le terminal UE 11 (étape F110).

Elle envoie le résultat de cette authentification au dispositif de contrôle 14 dans un message XMPP IQ-result (étape F120).

Si le résultat est positif (i.e. le terminal UE 11 a été authentifié par la fonction MME 20-11), le dispositif de contrôle 14 demande à la station de base 13A un identifiant TEID de tunnel de communication en voie descendante pour le terminal UE 11 (étape F130).

La station de base 13A établit une connexion RRC avec le terminal UE 11 (étape F140).

Elle envoie au dispositif de contrôle 14 l'identifiant de tunnel TEID requis dans un message OpenFlow™ (étape F150).

Le dispositif de contrôle 14 met à jour la base de données utilisateurs 25 avec cet identifiant de tunnel et le transmet dans un message OpenFlow™ PACKET_OUT au commutateur 16A et à la passerelle 15 sous forme de règles de traitement (étape F160).

Cette commande du dispositif de contrôle 14 du commutateur 16A et de la passerelle 15 permet de router de façon appropriée les flux de données destinés au terminal UE 11 dans le réseau.

Dans les deux exemples de procédures décrites ici, on a envisagé l'établissement d'un plan usager pour permettre à un terminal de communiquer avec un réseau externe de paquets de données. L'architecture proposée par l'invention permet également de maintenir et de mettre à jour ce plan usager en cas de dysfonctionnement (ex. défaillance ou surcharge) d'un équipement de réseau du plan usager ou d'une fonction de contrôle instanciée dans le système informatique en nuage 17. Ainsi, notamment, si une fonction virtuelle MME 20-11 allouée au terminal UE 11 est surchargée, le dispositif de contrôle 14 en est informé par l'intermédiaire du serveur XMPP 18 et peut agir de manière appropriée après avoir mis à jour sa base de données de contrôle 24.

Il peut notamment sélectionner une nouvelle fonction virtuelle MME 20 instanciée dans le système informatique en nuage 17, ou demander l'instanciation d'une nouvelle fonction virtuelle MME 20 dans le système informatique en nuage 17, ou encore équilibrer le trafic entre les fonctions virtuelles de gestion de la mobilité MME 20 déjà instanciées.

L'action du serveur XMPP 18 dans une telle situation peut être :
- réactive, en informant le dispositif de contrôle 14 de l'état de surcharge courant de la fonction de gestion de la mobilité 20-11 allouée au terminal UE 11 pour que le dispositif de contrôle 14 envisage une action appropriée ; ou
- proactive, en fournissant au dispositif de contrôle 14 une liste de fonctions MME 20 disponibles dans le système informatique en nuage 17 pour que le dispositif de contrôle 14 sélectionne une fonction parmi les fonctions disponibles et l'alloue au terminal UE 11.

Suite à cette allocation, le dispositif de contrôle 14 met à jour ses bases de données 24 et 25 de façon correspondante.

## Revendications

1. Dispositif de contrôle (14) d'un cœur de réseau IP, apte à commander une station de base (13) d'un réseau d'accès, un commutateur (15) du cœur de réseau IP et une passerelle d'interconnexion (16) du cœur de réseau IP à un réseau externe de paquets de données (12), le dispositif de contrôle comprenant :
- un module de communication (14B), configuré pour communiquer avec un serveur de connexion (18) à un système informatique en nuage et, par l'intermédiaire de ce serveur, avec une pluralité de fonctions virtuelles d'un plan de contrôle du cœur de réseau IP instanciées dans le système informatique en nuage ;
- un module de gestion (14D) :
∘ d'une première base de données (25) identifiant, pour au moins un terminal d'un utilisateur géré par le cœur de réseau IP et servi par la station de base, au moins une desdites fonctions virtuelles allouée à ce terminal ; et
∘ d'une seconde base de données (24) associant à au moins une desdites fonctions virtuelles, un identifiant de cette fonction auprès du serveur de connexion et un état de cette fonction ;
ce module de gestion étant configuré pour mettre à jour la première et/ou la seconde base de données à partir d'informations reçues par le module de communication du serveur de connexion et/ou des fonctions virtuelles ; et
- un module de commande (14A) configuré pour utiliser des données de la première et/ou de la deuxième base de données pour établir et/ou maintenir, pour un terminal (11) géré par le cœur de réseau IP, un plan usager entre ladite station de base, ledit commutateur et ladite passerelle d'interconnexion.

2. Dispositif de contrôle selon la revendication 1, dans lequel le serveur de connexion (18) est un serveur dont le dispositif de contrôle et les fonctions virtuelles sont des clients, le module de communication étant configuré pour communiquer avec le serveur de connexion et les fonctions virtuelles en utilisant le protocole de communication XMPP.

3. Dispositif de contrôle selon la revendication 1 ou 2, dans lequel les fonctions virtuelles du plan de contrôle instanciées dans le système informatique en nuage comprennent :
- au moins une fonction (20) de gestion de la mobilité de terminaux dans le cœur de réseau IP ;
- au moins une fonction (19) de contrôle de ladite passerelle d'interconnexion et/ou dudit commutateur.

4. Dispositif de contrôle selon l'une quelconque des revendications 1 à 3, comprenant en outre un module d'allocation (14C) configuré pour allouer au terminal géré par le cœur de réseau IP au moins une dite fonction virtuelle instanciée dans le système informatique en nuage en fonction d'une information représentative d'un état de disponibilité et/ou de charge courant de cette fonction virtuelle, transmise par le serveur de connexion.

5. Dispositif de contrôle selon l'une quelconque des revendications 1 à 4, dans lequel la première base de données (25) comprend en outre, pour le terminal, au moins un paramètre de communication destiné à être utilisé pour un transfert de données dans le plan usager établi par le module de commande.

6. Dispositif de contrôle selon la revendication 5, dans lequel ledit au moins un paramètre de communication comprend une adresse de la passerelle d'interconnexion, une adresse du commutateur et des identifiants de points d'extrémité d'un tunnel de communication établi dans le plan usager.

7. Serveur de connexion (18) à un système informatique en nuage comprenant :
- un module de gestion (18A) d'une base de données associant à au moins un client du serveur de connexion un identifiant unique de ce client auprès du serveur de connexion et un état du client, ledit au moins un client comprenant au moins une fonction virtuelle d'un plan de contrôle d'un cœur de réseau IP, instanciée dans le système informatique en nuage, et un dispositif de contrôle du cœur de réseau IP selon l'une quelconque des revendications 1 à 6 ;
- un module de communication (18B) apte à communiquer avec ladite au moins une fonction virtuelle et le dispositif de contrôle, et configuré pour transmettre au dispositif de contrôle des informations extraites de la base de données relatives à ladite au moins une fonction virtuelle.

8. Serveur de connexion selon la revendication 7, dans lequel le module de communication communiquant avec ladite au moins une fonction virtuelle et le dispositif de contrôle utilisent le protocole de communication XMPP.

9. Serveur de connexion selon la revendication 7 ou 8, dans lequel le module de communication est configuré pour transmettre au dispositif de contrôle une information représentative d'un état de disponibilité et/ou de charge courant d'au moins une dite fonction virtuelle identifiée dans la base de données.

10. Cœur de réseau IP (10) comprenant :
- un dispositif de contrôle (14) selon l'une quelconque des revendications 1 à 6 ;
- un serveur de connexion (18) à un système informatique en nuage selon l'une quelconque des revendications 7 à 9 ; et
- au moins une fonction virtuelle (19,20) d'un plan de contrôle du cœur de réseau IP instanciée dans le système informatique en nuage ;
le dispositif de contrôle et ladite au moins une fonction virtuelle étant des clients du serveur de connexion.

11. Procédé de contrôle d'un cœur de réseau IP comprenant :
- une étape de réception d'informations en provenance d'un serveur de connexion à un système informatique en nuage, et/ou d'au moins une fonction virtuelle d'un plan de contrôle du cœur de réseau IP instanciée dans le système informatique en nuage par l'intermédiaire du serveur de connexion ;
- une étape de gestion :
∘ d'une première base de données identifiant pour au moins un terminal d'un utilisateur géré par le cœur de réseau IP au moins une dite fonction virtuelle allouée à ce terminal ; et/ou
∘ d'une seconde base de données associant à au moins une dite fonction virtuelle, un identifiant de cette fonction auprès du serveur de connexion et un état de cette fonction ;
ladite étape de gestion comprenant une mise à jour de la première et/ou de la seconde base de données à partir desdites informations reçues ; et
- une étape d'établissement et/ou de maintien, pour un terminal géré par le cœur de réseau IP, d'un plan usager entre une station de base d'un réseau d'accès servant le terminal, un commutateur du cœur de réseau IP et une passerelle d'interconnexion du cœur de réseau IP à un réseau externe de paquets de données, en utilisant des données de la première et/ou de la deuxième base de données.

12. Procédé de contrôle selon la revendication 11, comprenant en outre une étape de commande de la station de base et/ou du commutateur et/ou de la passerelle d'interconnexion, cette étape de commande comprenant la transmission à la station de base et/ou au commutateur et/ou à la passerelle d'interconnexion d'au moins une règle de traitement de flux de données relatifs au terminal, ladite au moins une règle de traitement étant définie à partir de données de la première et/ou de la seconde base de données et étant destinée à être appliquée lors d'un transfert de données dans le plan usager.

13. Procédé de contrôle selon la revendication 11 ou 12, comprenant en outre une étape d'allocation d'une desdites fonctions virtuelles du plan de contrôle au terminal en fonction d'une information représentative d'un état de disponibilité et/ou de charge courant de cette fonction transmis par le serveur de connexion.

14. Programme d'ordinateur comportant des instructions pour l'exécution des étapes du procédé de contrôle selon l'une quelconque des revendications 11 à 13 lorsque ledit programme est exécuté par un ordinateur.

15. Support d'enregistrement lisible par un ordinateur sur lequel est enregistré un programme d'ordinateur comprenant des instructions pour l'exécution des étapes du procédé de contrôle selon l'une quelconque des revendications 11 à 13.

## Patentansprüche

1. Steuervorrichtung (14) eines IP-Kernnetzwerks, die dazu fähig ist, eine Basisstation (13) eines Zugangsnetzwerks, einen Switch (15) des IP-Kernnetzwerks und ein Verbindungsgateway (16) des IP-Kernnetzwerks zu einem externen Datenpaket-Netzwerk (12) zu steuern, wobei die Steuervorrichtung umfasst:
- ein Kommunikationsmodul (14B), das dazu konfiguriert ist, mit einem Verbindungsserver (18) zu einem Cloud-Computersystem und durch diesen Server mit einer Vielzahl virtueller Funktionen einer Steuerungsebene des IP-Kernnetzwerks, die im Cloud-Computersystem instanziert sind, zu kommunizieren;
- ein Verwaltungsmodul (14D):
∘ eine erste Datenbank (25), die für mindestens ein Endgerät eines Benutzers, das vom IP-Kernnetzwerk verwaltet und von der Basisstation bedient wird, mindestens eine der diesem Endgerät zugeordneten virtuellen Funktionen festlegt; und
∘ eine zweite Datenbank (24), die mindestens einer der virtuellen Funktionen eine Kennung dieser Funktion im Verbindungsserver und einen Zustand dieser Funktion zuordnet; wobei das Verwaltungsmodul dazu konfiguriert ist, die erste und/oder zweite Datenbank anhand von Informationen, die durch das Kommunikationsmodul des Verbindungsservers empfangen wurden, und/oder virtuelle Funktionen zu aktualisieren; und
- ein Steuermodul (14A), das dazu konfiguriert ist, Daten der ersten und/oder zweiten Datenbank zu nutzen, um für ein Endgerät (11), das vom IP-Kernnetzwerk verwaltet wird, eine Teilnehmerebene zwischen der Basisstation, dem Switch und dem Verbindungsgateway herzustellen und/oder aufrechtzuerhalten.

2. Steuervorrichtung nach Anspruch 1, wobei der Verbindungsserver (18) ein Server ist, dessen Steuervorrichtung und virtuelle Funktionen Clients sind, wobei das Kommunikationsmodul dazu konfiguriert ist, durch Verwendung des Kommunikationsprotokolls XMPP mit dem Verbindungsserver und den virtuellen Funktionen zu kommunizieren.

3. Steuervorrichtung nach Anspruch 1 bis 2, wobei die virtuellen Funktionen der Steuerungsebene, die im Cloud-Computersystem instanziert sind, umfassen:
- mindestens eine Funktion (20) zur Verwaltung der Mobilität der Endgeräte im IP-Kernnetzwerk;
- mindestens eine Funktion (19) zur Steuerung des Verbindungsgateways und/oder des Switches.

4. Steuervorrichtung nach einem der Ansprüche 1 bis 3, außerdem umfassend ein Zuordnungsmodul (14C), das dazu konfiguriert ist, dem durch das IP-Kernnetzwerk verwalteten Endgerät mindestens eine virtuelle Funktion, die im Cloud-Computersystem instanziert ist, in Abhängigkeit von einer Information, die für einen Zustand der Verfügbarkeit und/oder der aktuellen Last dieser virtuellen Funktion repräsentativ ist, zuzuordnen, die vom Verbindungsserver übermittelt wird.

5. Steuervorrichtung nach einem der Ansprüche 1 bis 4, wobei die erste Datenbank (25) außerdem für das Endgerät mindestens einen Kommunikationsparameter umfasst, der dazu bestimmt ist, für einen Datentransfer auf einer vom Steuermodul hergestellten Teilnehmerebene verwendet zu werden.

6. Steuervorrichtung nach Anspruch 5, wobei der mindestens eine Kommunikationsparameter eine Adresse des Verbindungsgateways, eine Adresse des Switches und Kennungen der Endpunkte eines in der Teilnehmerebene hergestellten Kommunikationstunnels umfasst.

7. Verbindungsserver (18) zu einem Cloud-Computersystem, umfassend:
- ein Modul zur Verwaltung (18A) einer Datenbank, die mindestens einem Client des Verbindungsservers eine eindeutige Kennung dieses Clients bei dem Verbindungsserver und einen Zustand des Clients zuordnet, wobei der mindestens eine Client mindestens eine virtuelle Funktion einer Steuerungsebene eines IP-Kernnetzwerks umfasst, die im Cloud-Computersystem instanziert ist, und eine Steuervorrichtung des IP-Kernnetzwerks nach einem der Ansprüche 1 bis 6;
- ein Kommunikationsmodul (18B), das dazu fähig ist, mit der mindestens einen virtuellen Funktion und der Steuervorrichtung zu kommunizieren, und dazu konfiguriert ist, der Steuervorrichtung Informationen aus der Datenbank zu der mindestens einen virtuellen Funktion zu übermitteln.

8. Verbindungsserver nach Anspruch 7, wobei das Kommunikationsmodul, das mit der mindestens einen virtuellen Funktion kommuniziert, und die Steuervorrichtung das Kommunikationsprotokoll XMPP verwenden.

9. Verbindungsserver nach Anspruch 7 oder 8, wobei das Kommunikationsmodul dazu konfiguriert ist, eine Information, die für einen Zustand der Verfügbarkeit und/oder der aktuellen Last von mindestens einer in der Datenbank festgelegten virtuellen Funktion repräsentativ ist, an die Steuervorrichtung zu übermitteln.

10. IP-Kernnetzwerk (10), umfassend:
- eine Steuervorrichtung (14) nach einem der Ansprüche 1 bis 6;
- einen Verbindungsserver (18) zu einem Cloud-Computersystem nach einem der Ansprüche 7 bis 9; und
- mindestens eine virtuelle Funktion (19, 20) einer Steuerungsebene des IP-Kernnetzwerks, die im Cloud-Computersystem instanziert ist;
wobei die Steuervorrichtung und die mindestens eine virtuelle Funktion Clients des Verbindungsservers sind.

11. Steuerungsverfahren eines IP-Kernnetzwerks, umfassend:
- einen Schritt des Empfangs von Informationen von einem Verbindungsserver zu einem Cloud-Computersystem und/oder mindestens einer virtuellen Funktion einer Steuerungsebene des IP-Kernnetzwerks, die im Cloud-Computersystem instanziert ist, mittels des Verbindungsservers;
- einen Schritt der Verwaltung:
∘ einer ersten Datenbank, die für mindestens ein Endgerät eines Benutzers, das vom IP-Kernnetzwerk verwaltet wird, mindestens eine der diesem Endgerät zugeordneten virtuellen Funktionen festlegt; und/oder
∘ einer zweiten Datenbank, die mindestens einer der virtuellen Funktionen eine Kennung dieser Funktion beim Verbindungsserver und einen Zustand dieser Funktion zuordnet;
wobei der Verwaltungsschritt eine Aktualisierung der ersten und/oder zweiten Datenbank anhand der empfangenen Informationen umfasst; und
- einen Schritt der Herstellung und/oder Aufrechterhaltung einer Teilnehmerebene zwischen einer Basisstation eines Zugangsnetzwerks, die das Endgerät bedient, einem Switch des IP-Kernnetzwerks und einem Verbindungsgateway des IP-Kernnetzwerks zu einem externen Datenpaket-Netzwerk für ein Endgerät, das vom IP-Kernnetzwerk verwaltet wird, unter Verwendung der Daten der ersten und/oder der zweiten Datenbank.

12. Steuerungsverfahren nach Anspruch 11, umfassend außerdem einen Schritt der Steuerung der Basisstation und/oder des Switches und/oder des Verbindungsgateways, wobei dieser Steuerungsschritt die Übermittlung mindestens einer Regel zur Verarbeitung des Datenflusses bezüglich des Endgeräts an die Basisstation und/oder an den Switch und/oder an das Verbindungsgateway umfasst, wobei die mindestens eine Verarbeitungsregel anhand von Daten der ersten und/oder der zweiten Datenbank definiert wird und dazu bestimmt ist, bei einem Datentransfer auf der Teilnehmerebene angewandt zu werden.

13. Steuerungsverfahren nach Anspruch 11 oder 12, umfassend außerdem einen Schritt der Zuordnung der virtuellen Funktionen der Steuerungsebene an das Endgerät in Abhängigkeit von einer Information, die für einen Zustand der Verfügbarkeit und/oder der aktuellen Last repräsentativ ist, der vom Verbindungsserver übermittelt wird.

14. Computerprogramm, umfassend Anweisungen zur Ausführung der Schritte des Steuerungsverfahrens nach einem der Ansprüche 11 bis 13, wenn das Programm durch einen Computer ausgeführt wird.

15. Computerlesbares Speichermedium, auf dem ein Computerprogramm gespeichert ist, das Anweisungen zur Ausführung der Schritte des Steuerungsverfahrens nach einem der Ansprüche 11 bis 13 umfasst.

## Claims

1. Device (14) for controlling an IP core network, the device being able to control a base station (13) of an access network, a switch (15) of the IP core network and an interconnection gateway (16) for interconnecting the IP core network with an external data packet network (12), the control device comprising:
- a communication module (14B), which is configured to communicate with a connection server (18) for connection to a cloud computing system and, via this server, with a plurality of virtual functions of a control plane of the IP core network that are instantiated in the cloud computing system;
- a management module (14D) for managing:
∘ a first database (25) that identifies, for at least one terminal of a user that is managed by the IP core network and served by the base station, at least one of said virtual functions that is assigned to this terminal; and
∘ a second database (24) that associates with at least one of said virtual functions an identifier for this function with the connection server and a status of this function;
this management module being configured to update the first and/or the second database on the basis of information received by the communication module of the connection server and/or the virtual functions; and
- a control module (14A) configured to use the data of the first and/or of the second database in order to set up and/or maintain, for a terminal (11) managed by the IP core network, a user plane between said base station, said switch and said interconnection gateway.

2. Control device according to Claim 1, wherein the connection server (18) is a server of which the control device and virtual functions are clients, the communication module being configured to communicate with the connection server and the virtual functions by using the XMPP communication protocol.

3. Control device according to Claim 1 or 2, wherein the virtual functions of the control plane that are instantiated in the cloud computing system comprise:
- at least one function (20) for managing the mobility of terminals in the IP core network;
- at least one function (19) for controlling said interconnection gateway and/or said switch.

4. Control device according to any one of Claims 1 to 3, further comprising an assignment module (14C) configured to assign to the terminal managed by the IP core network at least one said virtual function instantiated in the cloud computing system on the basis of an item of information representative of a current availability and/or load status of this virtual function, which item of information is transmitted by the connection server.

5. Control device according to any one of Claims 1 to 4, wherein the first database (25) further comprises, for the terminal, at least one communication parameter that is intended to be used for a data transfer in the user plane set up by the control module.

6. Control device according to Claim 5, wherein said at least one communication parameter comprises an address of the interconnection gateway, an address of the switch and identifiers of end points of a communication tunnel set up in the user plane.

7. Connection server (18) for connection to a cloud computing system, comprising:
- a management module (18A) for managing a database that associates with at least one client of the connection server a unique identifier for this client with the connection server and a status of the client, said at least one client comprising at least one virtual function of a control plane of an IP core network, which function is instantiated in the cloud computing system, and a device for controlling the IP core network according to any one of Claims 1 to 6;
- a communication module (18B) that is able to communicate with said at least one virtual function and the control device and is configured to transmit to the control device information extracted from the database and relating to said at least one virtual function.

8. Connection server according to Claim 7, wherein the communication module that communicates with said at least one virtual function and the control device use the XMPP communication protocol.

9. Connection server according to Claim 7 or 8, wherein the communication module is configured to transmit to the control device an item of information representative of a current availability and/or load status of at least one said virtual function identified in the database.

10. IP core network (10) comprising:
- a control device (14) according to any one of Claims 1 to 6;
- a connection server (18) for connection to a cloud computing system according to any one of Claims 7 to 9; and
- at least one virtual function (19, 20) of a control plane of the IP core network that is instantiated in the cloud computing system;
the control device and said at least one virtual function being clients of the connection server.

11. Method for controlling an IP core network, comprising:
- a step of receiving information from a connection server for connection to a cloud computing system and/or from at least one virtual function of a control plane of the IP core network, which function is instantiated in the cloud computing system, via the connection server;
- a step of managing:
∘ a first database that identifies, for at least one terminal of a user that is managed by the IP core network, at least one said virtual function that is assigned to this terminal; and/or
∘ a second database that associates with at least one said virtual function an identifier for this function with the connection server and a status of this function;
said management step comprising updating the first and/or the second database on the basis of said received information; and
- a step of setting up and/or maintaining, for a terminal managed by the IP core network, a user plane between a base station of an access network serving the terminal, a switch of the IP core network and an interconnection gateway for interconnecting the IP core network with an external data packet network, by using data of the first and/or of the second database.

12. Control method according to Claim 11, further comprising a step of controlling the base station and/or the switch and/or the interconnection gateway, this control step comprising transmitting, to the base station and/or to the switch and/or to the interconnection gateway, at least one rule for processing data streams relating to the terminal, said at least one processing rule being defined on the basis of data of the first and/or of the second database and being intended to be applied during a data transfer in the user plane.

13. Control method according to Claim 11 or 12, further comprising a step of assigning one of said virtual functions of the control plane to the terminal on the basis of an item of information representative of a current availability and/or load status of this function, which is transmitted by the connection server.

14. Computer program including instructions for executing the steps of the control method according to any one of Claims 11 to 13 when said program is executed by a computer.

15. Computer-readable recording medium on which there is recorded a computer program comprising instructions for executing the steps of the control method according to any one of Claims 11 to 13.
